(19) Europäisches Patentamt
European Patent Office
Office européen des brevets

(11) EP 4 775 299 A1

(12) # EUROPEAN PATENT APPLICATION
published in accordance with Art. 153(4) EPC

(43) Date of publication:
**15.07.2026 Bulletin 2026/29**

(21) Application number: **24862038.7**

(22) Date of filing: **05.09.2024**

(51) International Patent Classification (IPC):
***B01D 67/00** (2006.01)* ***B01D 69/12** (2006.01)*

(52) Cooperative Patent Classification (CPC):
**B01D 67/00; B01D 69/12**

(86) International application number:
**PCT/CN2024/117156**

(87) International publication number:
**WO 2025/051199 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 CN 202311142229**
**05.09.2023 CN 202311142013**
**05.09.2023 CN 202311141335**

(71) Applicants:
- **CHINA PETROLEUM & CHEMICAL CORPORATION**
  **Chaoyang District**
  **Beijing 100728 (CN)**
- **Sinopec (Beijing) Research Institute of Chemical Industry Co., Ltd.**
  **Beijing 100013 (CN)**

(72) Inventors:
- **WU, Changjiang**
  **Beijing 100013 (CN)**
- **ZHAO, Guoke**
  **Beijing 100013 (CN)**
- **ZHANG, Yang**
  **Beijing 100013 (CN)**
- **LIU, Yiqun**
  **Beijing 100013 (CN)**
- **PAN, Guoyuan**
  **Beijing 100013 (CN)**
- **TANG, Gongqing**
  **Beijing 100013 (CN)**
- **YU, Hao**
  **Beijing 100013 (CN)**
- **ZHAO, Muhua**
  **Beijing 100013 (CN)**
- **LI, Yu**
  **Beijing 100013 (CN)**
- **ZHONG, Tian**
  **Beijing 100013 (CN)**

(74) Representative: **Hoffmann Eitle**
**Patent- und Rechtsanwälte PartmbB**
**Arabellastraße 30**
**81925 München (DE)**

(54) **POSITIVELY CHARGED ACID- AND ALKALI-RESISTANT COMPOSITE NANOFILTRATION MEMBRANE AND PREPARATION METHOD THEREFOR AND USE THEREOF**

(57) A positively charged acid- and alkali-resistant composite nanofiltration membrane and a preparation method therefor and a use thereof. The positively charged acid- and alkali-resistant composite nanofiltration membrane sequentially comprises a bottom layer, a porous intermediate layer, and an acid- and alkali-resistant separation layer. The acid- and alkali-resistant separation layer comprises: (1) the quaternary ammonium salt group shown in formula I and/or the quaternary phosphonium salt group shown in formula II, grafted to the acid- and alkali-resistant separation layer through a N atom,

EP 4 775 299 A1

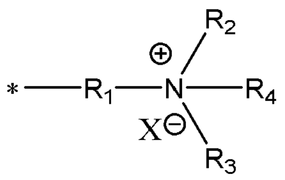 Formula I; 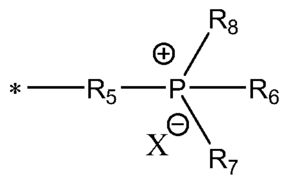 Formula II;

wherein, $R_1$ is substituted or unsubstituted C1-C9 alkylene or phenylene; $R_2$, $R_3$, and $R_4$ are each independently selected from C1-C3 alkyl or phenyl; $R_5$ is a C1-C6 alkylene, phenylene, or C7-C10 aralkylene; $R_6$, $R_7$, and $R_8$ are each independently phenyl or C7-C10 aralkyl; X is halogen; or (2) a quaternary ammonium salt structure, wherein the quaternary ammonium salt structure comprises the structural formula shown in formula III and/or the structural formula shown in formula IV,

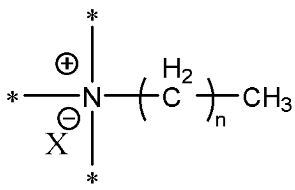 Formula III; 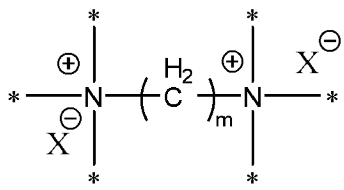 Formula IV;

wherein X is halogen; n is an integer of 0 to 10; m is an integer of 2 to 10. The acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer. The nanofiltration membrane has a high metal retention rate while maintaining a high water flux.

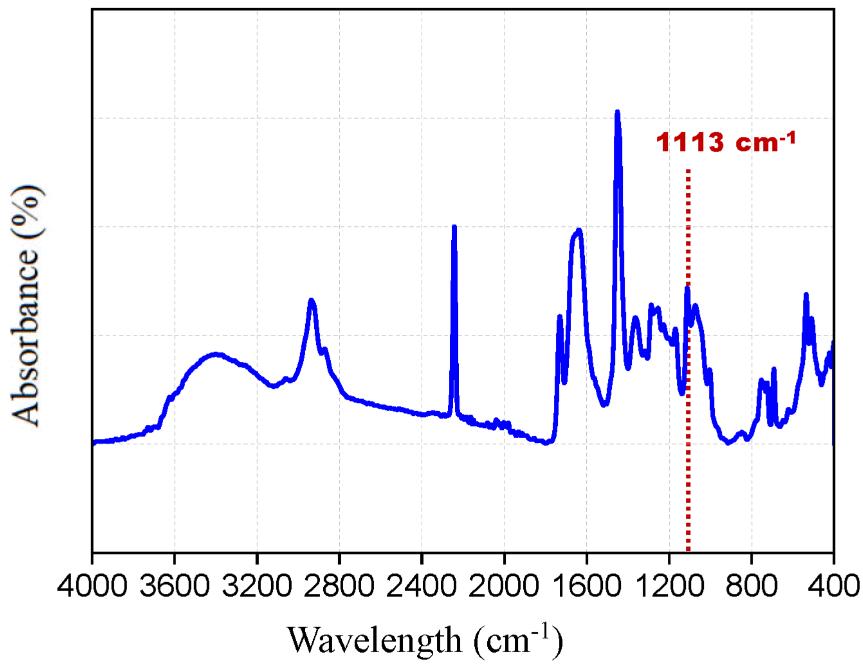


Figure 1

## Description

Technical field

The present invention relates to the field of membranes, and specifically, to a positively charged acid- and alkali-resistant composite nanofiltration membrane and a preparation method therefor and a use thereof.

Background art

Nanofiltration is a pressure-driven membrane separation process. Nanofiltration membrane falls between ultrafiltration membrane and reverse osmosis membrane, with a pore size of 1-2 nm and a molecular weight cutoff of 200-2000 Da. Owing to numerous advantages such as high separation efficiency, low energy consumption, and small footprint, nanofiltration is widely used in various fields including wastewater treatment, seawater desalination, chemical separation, and food and pharmaceutical processing. It plays a crucial role in modern separation and purification processes.

The mechanism of nanofiltration is relatively complex. Currently, it is generally accepted that nanofiltration performance results from the combined effects of size sieving and Donnan effect. In addition to the density of the membrane itself, the nanofiltration process exhibits significant charge selectivity. Polyamide thin-film composite nanofiltration membrane is the most widely used commercial nanofiltration membrane. The hydrolysis of acyl chloride groups on the membrane surface causes the formation of a large number of carboxyl groups, rendering the membrane surface negatively charged. Due to the influence of the Donnan effect, the membrane has a low removal rate for high valence cations, which limits its application in some special fields. Representative examples include separation of $Mg^{2+}$ and $Li^{+}$ in lithium extraction from salt lake brine, softening of drinking water, heavy metal wastewater treatment, crude salt refining, concentration and separation of specific substances in the food industry, etc. Further, positively charged nanofiltration membrane exhibits better antifouling performance in the course of retaining positively charged ions and dye molecules. Based on the above, high-performance positively charged nanofiltration membrane holds a promising application prospect.

**In** addition to the charged properties of the membrane, some application scenarios also have higher requirements for the acid resistance of the membrane. One application scenario is wastewater treatment in hydrometallurgy. **In** hydrometallurgical process, acidic leachate containing metal cations such as lithium, nickel, cobalt, and manganese is obtained. The positively charged nanofiltration membrane can effectively separate monovalent and high valent cations, and subsequently reverse osmosis technology is used for concentration and enrichment, thereby achieving comprehensive utilization of resources. **In** the integrated adsorption-membrane process for lithium extraction, the desorption process of the adsorbent needs to be carried out under acidic conditions, resulting in the original solution of the nanofiltration process being acidic. However, under acidic conditions, the C=O bond in the polyamide structure is susceptible to nucleophilic electron attacks from $H^{+}$, leading to hydrolysis of the amide bond and damage to the membrane separation layer structure, resulting in decreased retention performance.

Another application scenario of the nanofiltration membrane is treatment of acidic electroplating wastewater. Electroplating is a process that modifies the surface properties of metals and non-metals via electrochemical technology to achieve desired surface corrosion resistance, electrical conductivity, and decorativeness. Electroplating is widely used in China, generating large volumes of wastewater, accounting for about 20% of total industrial wastewater discharge annually. Electroplating wastewater contains numerous toxic and hazardous substances, among which wastewater containing copper, nickel, chromium, zinc and other heavy metal ions accounts for about 40%. Additionally, the acid pickling and activation processes commonly used in electroplating render the above wastewater acidic. The comprehensive treatment of acidic electroplating wastewater is not only a requirement for environmental protection but also an effective means to realize resource recycling of industrial wastewater, thereby reducing costs and improving efficiency. Currently, the effective recovery of heavy metal ions from electroplating wastewater has become a key issue for the sustainable development of the electroplating industry.

Conventional chemical precipitation methods suffer from problems such as large amounts of toxic sludge and low heavy metal resource recovery rates. In contrast, membrane separation technology, which is characterized by high separation efficiency, no second pollution, low energy consumption, and easy operation, etc., has been widely used to recover copper, nickel, chromium, zinc and other metal ions from electroplating wastewater, among which nanofiltration shows a good application prospect in the above process. Currently, it is generally accepted that nanofiltration performance results from the combined effects of size sieving and Donnan effect. In addition to the density of the membrane itself, the nanofiltration process exhibits significant charge selectivity. Polyamide thin-film composite nanofiltration membrane is the most widely used commercial nanofiltration membrane. The acyl chloride groups on the membrane surface hydrolyze to form a large number of carboxyl groups, rendering the membrane surface negatively charged. Due to the influence of the Donnan effect, the membrane has a low removal rate for high valence cations, which results in low recovery rates of

copper, nickel, chromium, zinc and other metal ions.

In addition to the charged properties of the membrane, the treatment of acidic electroplating wastewater also has higher requirements for the acid resistance of the membrane. Under acidic conditions, the C=O bond in conventional polyamide nanofiltration membrane structure is susceptible to nucleophilic electron attacks from $H^+$, leading to hydrolysis of the amide bond and damage to the membrane separation layer structure, resulting in decreased retention performance. In order to ensure the structural stability of the nanofiltration membrane, the pH of the influent needs to be adjusted, which not only increases the amount of reagents used, but also makes the treatment process more complex.

Another application scenario of the nanofiltration membrane is the treatment of wastewater from the production of titanium white by sulfuric acid method. Titanium dioxide, the main component of titanium white, is safe and non-toxic. It is widely used in industries such as coatings, papermaking, printing, chemical fibers, plastics and rubber, wherein coatings account for more than 60%. China is a major producer of titanium white. Since 2019, the overall scale of titanium white in China has ranked first in the world, wherein the production of titanium white by sulfuric acid method accounts for more than 90% of the total production of titanium white. In the process of producing titanium white by sulfuric acid method, for every ton of titanium white produced, 8-10 tons of waste sulfuric acid with a concentration of 15-20 wt% will be generated. The waste sulfuric acid solution contains about 5 wt% $Fe^{2+}$, along with small amounts of aluminum, manganese, calcium, magnesium and other metal sulfates. How to address the low-cost treatment and pollution-free discharge of acidic wastewater from the production of titanium white by sulfuric acid method is the first challenge that troubles the development of China’s titanium white industry.

Currently, domestic titanium white enterprises mainly employ three processes for comprehensive treatment of waste acid: neutralization, waste acid concentration, and purification. Among these, alkali neutralization method is the most commonly used waste acid treatment process, but this process not only fails to separate and recover sulfuric acid and many valuable metals in the waste acid, but also generates titanium gypsum mainly composed of calcium sulfate and other solid wastes, which has become a new challenge in the treatment of these solid wastes. With the development of membrane separation technology, nanofiltration provides a new option for treating acidic wastewater from the production of titanium white. Based on size sieving and Donnan effect, nanofiltration membranes can selectively separate monovalent and divalent ions, showing good application prospects in the above process. Additionally, membrane treatment features a short process flow, simple operation, and low production costs. It enables waste acid treatment while realizing sulfur resource recovery, which is of great significance for the green and sustainable development of the titanium white industry.

The problem is that currently commercialized polyamide nanofiltration membranes are not acid resistant. Under acidic conditions, the C=O bond in the polyamide structure is susceptible to nucleophilic electron attacks from $H^+$, leading to hydrolysis of the amide bond and damage to the membrane separation layer structure, resulting in decreased retention performance. In addition, the hydrolysis of acyl chloride groups on the polyamide membrane surface causes the formation of a large number of carboxyl groups, rendering the membrane surface negatively charged. Due to the influence of the Donnan effect, the membrane has a low removal rate for $Fe^{2+}$, $Ca^{2+}$, and $Mg^{2+}$ and other divalent cations. In contrast, positively charged nanofiltration membranes are more suitable for the above-mentioned application scenarios.

Therefore, it is urgent to develop a positively charged nanofiltration membrane with a simple preparation method and excellent acid resistance, in order to overcome the limitations of existing nanofiltration membranes in the above-mentioned application scenarios. Especially, there is an urgent need to develop a positively charged nanofiltration membrane with a simple preparation method and excellent acid resistance, in order to improve the Donnan effect in the nanofiltration separation process and achieve effective separation and recovery of target metal cations.

Contents of the invention

The objective of the present invention is to overcome the problems of poor acid- and alkali-resistance and low metal separation efficiency existing in current nanofiltration membranes, and to provide a positively charged acid- and alkali-resistant composite nanofiltration membrane, as well as its preparation method and use. The specific polymer structure of the separation layer in this positively charged acid- and alkali-resistant composite nanofiltration membrane has good chemical inertness and high hydrogen bond density, which endows the separation layer with high acid- and alkali-resistance. Meanwhile, the grafting of specific quaternary ammonium salt groups and/or quaternary phosphonium salt groups can improve the positive charge on the membrane surface, enabling the nanofiltration membrane to has excellent retention effect on divalent and higher valent metal ions and high metal separation coefficient while maintaining high water flux.

To achieve the above objective, in a first aspect, the present invention provides a positively charged acid- and alkali-resistant composite nanofiltration membrane, which sequentially comprises a bottom layer, a porous intermediate layer, and an acid- and alkali-resistant separation layer;

wherein, the acid- and alkali-resistant separation layer comprises:

(1) a quaternary ammonium salt group represented by Formula I and/or a quaternary phosphonium salt group represented by Formula II, which are grafted onto the acid- and alkali-resistant separation layer via a N atom;

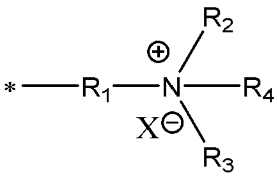 Formula I; 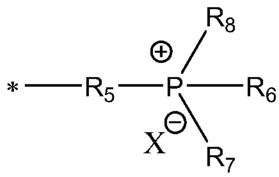 Formula II;

wherein, $R_1$ is a substituted or unsubstituted C1-C9 alkylene group or phenylene group; $R_2$, $R_3$, and $R_4$ are each independently selected from a C1-C3 alkyl group or phenyl group; $R_5$ is a C1-C6 alkylene group, phenylene group, or C7-C10 aralkylene group; $R_6$, $R_7$, and $R_8$ are each independently a phenyl group or C7-C10 aralkyl group; X is a halogen; or

(2) a quaternary ammonium salt structure, which comprises a structural formula represented by Formula III and/or a structural formula represented by Formula IV,

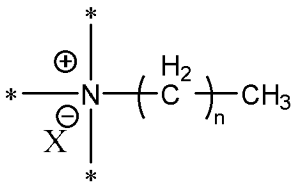 Formula III; 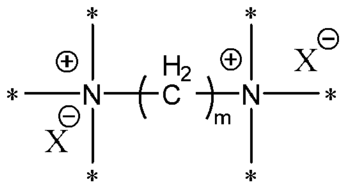 Formula IV;

X is a halogen; n is an integer ranging from 0 to 10; m is an integer ranging from 2 to 10;

wherein, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer.

In a second aspect, the present invention provides a method for preparing a positively charged acid- and alkali-resistant composite nanofiltration membrane, wherein the preparation method comprises the following steps:

S1. under stirring conditions, adding a first solution containing a halogenated quaternary ammonium salt and/or a halogenated quaternary phosphonium salt, and a catalyst to a second solution containing a polyamine, and carrying out a reaction to obtain a modified polyamine;

S2. preparing a porous support layer on a bottom layer;

S3. bringing the surface of the porous support layer into a first contact with an aqueous phase containing the modified polyamine obtained in step S1, and then a second contact with an organic phase containing a polyfunctional polar monomer, and performing heat treatment to obtain the positively charged acid- and alkali-resistant composite nanofiltration membrane;

the halogenated quaternary ammonium salt has a structure represented by Formula 1; the halogenated quaternary phosphonium salt has a structure represented by Formula 2;

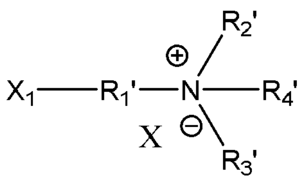 Formula 1; 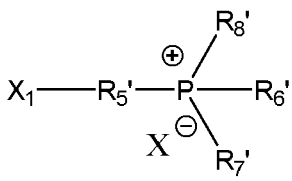 Formula 2;

wherein, $R_1$' is a substituted or unsubstituted C1-C9 alkylene group or phenylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group;

X and $X_1$ are each independently a halogen.

In a third aspect, the present invention provides a method for preparing a positively charged acid- and alkali-resistant composite nanofiltration membrane, wherein the preparation method comprises the following steps:

S1': sequentially preparing a porous support layer and an acid- and alkali-resistant separation layer on a bottom layer to obtain a composite membrane;

S2': bringing the composite membrane into contact with an aqueous solution containing a catalyst, a halogenated quaternary ammonium salt and/or a halogenated quaternary phosphonium salt, and drying, to obtain the positively charged acid- and alkali-resistant composite nanofiltration membrane;

the halogenated quaternary ammonium salt has a structure represented by Formula 1; the halogenated quaternary phosphonium salt has a structure represented by Formula 2;

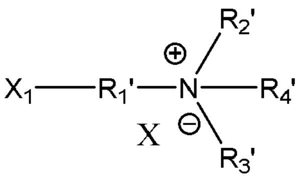 Formula 1; 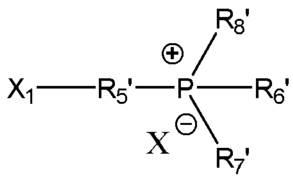 Formula 2;

wherein, $R_1$' is a substituted or unsubstituted C1-C9 alkylene group or phenylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group;

X and $X_1$ are each independently a halogen.

In a fourth aspect, the present invention provides a method for preparing a positively charged acid- and alkali-resistant composite nanofiltration membrane, wherein the preparation method comprises the following steps:

S1": preparing a porous support layer on a bottom layer;

S2": sequentially bringing the membrane layer obtained in step S1" into a first contact with an aqueous phase of a polyamine containing a tertiary amine group, and a second contact with an organic phase containing a polyfunctional polar monomer, and performing heat treatment to obtain a composite nanofiltration membrane including an acid- and alkali-resistant separation layer;

S3": bringing the composite nanofiltration membrane into a third contact with an organic solution containing a halogenated alkane and a catalyst, and drying to obtain the positively charged acid- and alkali-resistant composite nanofiltration membrane.

In a fifth aspect, the present invention provides a positively charged acid- and alkali-resistant composite nanofiltration membrane prepared by the above-mentioned preparation method.

In a sixth aspect, the present invention provides a use of the above-mentioned positively charged acid- and alkali-resistant composite nanofiltration membrane in a field of water treatment.

Through the above technical solutions, the positively charged acid- and alkali-resistant composite nanofiltration membrane provided by the present invention, as well as its preparation method and use, achieve the following beneficial effects:

The specific polymer structure in the separation layer of the positively charged acid- and alkali-resistant composite nanofiltration membrane provided by the present invention endows the separation layer with good chemical inertness and high hydrogen bond density, thereby enabling the separation layer to have excellent acid- and alkali-resistance. The acid- and alkali-resistant separation layer is grafted with specific quaternary ammonium salt groups and/or quaternary phosphonium salt groups via N atoms, or contains quaternary ammonium salt groups in itself, whereby the positive charge density of the nanofiltration membrane is significantly increased. By utilizing the repulsion effect between positive charges, the retention effect of the nanofiltration membrane on $Mg^{2+}$, $Ni^{2+}$, $Cu^{2+}$, $Fe^{2+}$ and other divalent and higher valent metal cations is improved, enabling the nanofiltration membrane to have improved metal separation efficiency while maintaining high water flux.

In the preparation method of the positively charged acid- and alkali-resistant composite nanofiltration membrane provided in the second aspect of the present invention, the halogenated quaternary ammonium salt and/or halogenated quaternary phosphonium salt reacts with the polyamine under the action of an alkaline catalyst to modify the polyamine, and the modified polyamine then undergoes a polymerization reaction with the polar monomer, introducing groups with strong conjugation effect and good chemical inertness, both of which greatly improve the acid- and alkali-resistance of the nanofiltration membrane. At the same time, the high positive charge density on the surface of the separation membrane improves the retention effect of the nanofiltration membrane on $Mg^{2+}$, improves the magnesium-lithium separation efficiency of the nanofiltration membrane, and simultaneously maintains the high water flux of the nanofiltration

membrane.

In the preparation method of the positively charged acid- and alkali-resistant composite nanofiltration membrane provided in the third aspect of the present invention, the prepared positively charged acid- and alkali-resistant composite nanofiltration membrane contains good chemically inert groups and has high hydrogen bond density, which gives the nanofiltration membrane excellent acid- and alkali-resistance. Subsequent grafting with specific quaternary ammonium salt groups and/or quaternary phosphonium salt groups significantly increases the positive charge density on the nanofiltration membrane surface. By utilizing the repulsion effect between positive charges, the retention effect of the nanofiltration membrane on divalent and higher valent heavy metal ions is improved, while maintaining good water flux.

In the preparation method of the positively charged acid- and alkali-resistant composite nanofiltration membrane provided in the fourth aspect of the present invention, the halogenated alkane reacts with the tertiary amine in the acid- and alkali-resistant separation layer under the action of an alkaline catalyst, converting the tertiary amine into positively charged quaternary ammonium salt groups. By utilizing the repulsion effect between positive charges, the retention effect of the nanofiltration membrane on divalent and higher valent metal cations is improved, and meanwhile, the positively charged acid- and alkali-resistant composite nanofiltration membrane can still maintain high water flux.

Description of the figures

Figure 1 is the IR spectrum of the positively charged acid- and alkali-resistant composite nanofiltration membrane prepared in Example A1 of the present invention.

Figure 2 is the XPS spectrum of phosphorus element on the surface of the positively charged acid- and alkali-resistant composite nanofiltration membrane prepared in Example B1 of the present invention.

Figure 3 is the XPS spectrum of nitrogen element on the surface of the positively charged acid- and alkali-resistant composite nanofiltration membrane prepared in Example C1 of the present invention.

Detailed description of specific embodiments

The endpoints and any values of the ranges disclosed herein are not limited to the exact ranges or values, which should be understood to include values close to those ranges or values. For the numerical range, the endpoint values of each range, the endpoint values of each range and the individual point values, as well as the individual point values, can be combined with each other to obtain one or more new numerical ranges. These numerical ranges should be regarded as specifically disclosed herein.

In a first aspect, the present invention provides a positively charged acid- and alkali-resistant composite nanofiltration membrane, which sequentially comprises a bottom layer, a porous intermediate layer, and an acid- and alkali-resistant separation layer;

wherein, the acid- and alkali-resistant separation layer comprises:

(1) a quaternary ammonium salt group represented by Formula I and/or a quaternary phosphonium salt group represented by Formula II, which are grafted onto the acid- and alkali-resistant separation layer via a N atom;

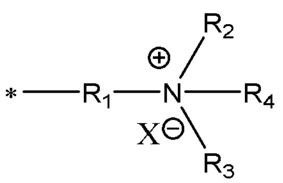
Formula I;

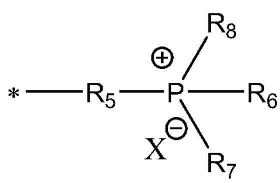
Formula II;

wherein, $R_1$ is a substituted or unsubstituted C1-C9 alkylene group or phenylene group; $R_2$, $R_3$, and $R_4$ are each independently selected from a C1-C3 alkyl group or phenyl group; $R_5$ is a C1-C6 alkylene group, phenylene group, or C7-C10 aralkylene group; $R_6$, $R_7$, and $R_8$ are each independently a phenyl group or C7-C10 aralkyl group; X is a halogen; or

(2) a quaternary ammonium salt structure, which comprises a structural formula represented by Formula III and/or a structural formula represented by Formula IV,

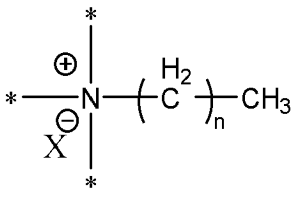 Formula III; 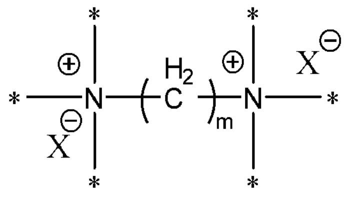 Formula IV;

X is a halogen; n is an integer ranging from 0 to 10; m is an integer ranging from 2 to 10.

In one embodiment, the present invention provides a positively charged acid- and alkali-resistant composite nanofiltration membrane, which sequentially comprises a bottom layer, a porous intermediate layer, and an acid- and alkali-resistant separation layer;

wherein, the acid- and alkali-resistant separation layer is grafted with a quaternary ammonium salt group represented by Formula I and/or a quaternary phosphonium salt group represented by Formula II via N atoms

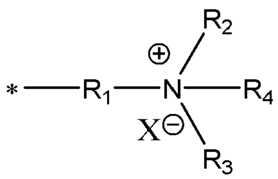 Formula I; 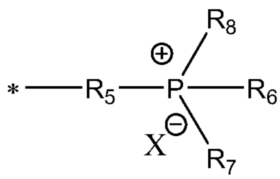 Formula II;

wherein, $R_1$ is a substituted or unsubstituted C1-C9 alkylene group or phenylene group; $R_2$, $R_3$, and $R_4$ are each independently selected from a C1-C3 alkyl group or phenyl group; $R_5$ is a C1-C6 alkylene group, phenylene group, or C7-C10 aralkylene group; $R_6$, $R_7$, and $R_8$ are each independently a phenyl group or C7-C10 aralkyl group;
X is a halogen.

In the present invention, * refers to the site at which the quaternary ammonium salt group or quaternary phosphonium salt group is bonded to -NH-,

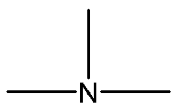 or 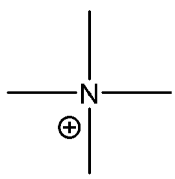

in the acid- and alkali-resistant separation layer.

In the present invention, specific quaternary ammonium salt groups and/or quaternary phosphonium salt groups are grafted onto the acid- and alkali-resistant separation layer, so that the positively charged acid- and alkali-resistant composite nanofiltration membrane has a high magnesium-lithium separation coefficient while maintaining high water flux, which is particularly suitable for the field of water treatment and separation.

In the present invention, $R_1$ can be a branched or straight chain alkylene group.

Further, $R_1$ is a substituted or unsubstituted C1-C9 alkylene group or phenylene group, the substituent being a carboxyl, nitro, amino, silyl, carbonyl, ether or ester group; preferably, $R_1$ is an unsubstituted C1-C9 alkylene group or phenylene group; preferably, $R_1$ is a substituted or unsubstituted C1-C6 alkylene group or phenylene group; preferably, $R_1$ is an unsubstituted C1-C6 alkylene group or phenylene group; preferably, $R_1$ is a substituted or unsubstituted C1-C3 alkylene group; preferably, $R_1$ is an unsubstituted C1-C3 alkylene group.

Further, $R_2$, $R_3$, $R_4$ are each independently selected from a C1-C3 alkyl group; preferably, $R_2$, $R_3$, $R_4$ are each independently $CH_3$.

Further, $R_5$ is a C1-C3 alkylene group, phenylene group, or C8-C10 aralkylene group; preferably, $R_5$ is a C1-C3 alkylene group or C8-C10 aralkylene group.

Further, $R_6$, $R_7$, $R_8$ are each independently a phenyl group or C8-C10 aralkyl group; preferably, $R_6$, $R_7$, $R_8$ are each independently a phenyl group.

Further, X is Cl, Br or I.

Further, the acid- and alkali-resistant separation layer is at least one selected from a polyurea separation layer, a

polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer.

In one specific embodiment of the present invention, in Formula I, $R_1$ is ethylene,

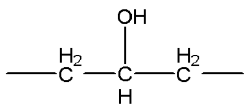,

propylene, butylene, pentylene or hexylene; $R_2$, $R_3$, $R_4$ are methyl, ethyl or phenyl; X is Cl, Br or I.

In one specific embodiment of the present invention, in Formula II, $R_5$ is propylene, ethylene, methylene or

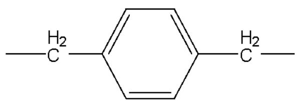;

$R_6$, $R_7$, $R_8$ are phenyl; X is Cl, Br or I.

According to the present invention, the content of nitrogen atoms in the quaternary ammonium salt groups of the positively charged acid- and alkali-resistant composite nanofiltration membrane is 0.5-20 at.%, preferably 2-15 at.%.

According to the present invention, the content of phosphorus atoms in the positively charged acid- and alkali-resistant composite nanofiltration membrane is 0.4-3 at.%, preferably 0.5-2 at.%.

In one embodiment, the positively charged acid- and alkali-resistant composite nanofiltration membrane is prepared by the preparation method described in the second aspect.

According to the present invention, the content of nitrogen atoms in the quaternary ammonium salt groups of the positively charged acid- and alkali-resistant composite nanofiltration membrane is 10-20 at.%, for example, 10-18 at.%, 11-17 at.%.

In the present invention, when the content of nitrogen atoms in the quaternary ammonium salt groups of the positively charged acid- and alkali-resistant composite nanofiltration membrane falls within the above range, the membrane exhibits a high surface electrode potential and a small average pore size, thereby achieving a high magnesium-lithium separation coefficient. Meanwhile, grafting the quaternary ammonium salt groups represented by Formula I onto the acid- and alkali-resistant separation layer via N atoms does not excessively affect the water flux of the membrane, allowing the membrane to maintain good water flux.

Further, the content of nitrogen atoms in the quaternary ammonium salt groups of the positively charged acid- and alkali-resistant composite nanofiltration membrane is 10-15 at.%.

According to the present invention, the content of phosphorus atoms in the positively charged acid- and alkali-resistant composite nanofiltration membrane is 0.4-3 at.%, for example, 0.4-2.5 at.%, 0.8-2.2 at.%.

In the present invention, when the content of phosphorus atoms in the positively charged acid- and alkali-resistant composite nanofiltration membrane falls within the above range, the membrane has a high surface electrode potential and a small average pore size, resulting in a high magnesium-lithium separation coefficient. At the same time, grafting the quaternary phosphonium salt groups represented by Formula II onto the acid- and alkali-resistant separation layer via N atoms does not excessively affect the water flux of the membrane, allowing the membrane to maintain good water flux.

Further, the content of phosphorus atoms in the positively charged acid- and alkali-resistant composite nanofiltration membrane is 0.5-2 at.%.

According to the present invention, the surface Zeta potential of the positively charged acid- and alkali-resistant composite nanofiltration membrane is 0-30 mV.

In the present invention, when the surface Zeta potential of the positively charged acid- and alkali-resistant composite nanofiltration membrane falls within the above range, it indicates the membrane has a high surface electrode potential. When used for lithium-magnesium separation in acidic or alkaline environments, the membrane can better repel $Mg^{2+}$, preventing $Mg^{2+}$ in the liquid from easily passing through the membrane while allowing $Li^+$ to pass through as much as possible, thus enabling the membrane to achieve high lithium-magnesium separation efficiency.

In the present invention, the surface Zeta potential of the positively charged acid- and alkali-resistant composite nanofiltration membrane refers to the surface Zeta potential at pH=7.

Further, the surface Zeta potential of the positively charged acid- and alkali-resistant composite nanofiltration membrane is 5-25 mV.

According to the present invention, the average pore size of the positively charged acid- and alkali-resistant

composite nanofiltration membrane is 0.1-0.4 nm.

In the present invention, when the average pore size of the positively charged acid- and alkali-resistant composite nanofiltration membrane falls within the above range, it indicates the membrane has high density. When used for lithium-magnesium separation in acidic or alkaline environments, the membrane can better repel $Mg^{2+}$, preventing $Mg^{2+}$ in the liquid from easily passing through the membrane while allowing $Li^+$ to pass through as much as possible, thus enabling the membrane to achieve high lithium-magnesium separation efficiency.

Further, the average pore size of the positively charged acid- and alkali-resistant composite nanofiltration membrane is 0.2-0.3 nm.

According to the present invention, the contact angle of the positively charged acid- and alkali-resistant composite nanofiltration membrane is 30-80°.

In the present invention, when the contact angle of the positively charged acid- and alkali-resistant composite nanofiltration membrane falls within the range specified in the present invention, it indicates that the membrane has good hydrophilicity, thus enabling the composite nanofiltration membrane to have high water flux.

Further, the contact angle of the positively charged acid- and alkali-resistant composite nanofiltration membrane is 30-60°.

In the present invention, there is no specific limitation on the bottom layer and the porous support layer, and they can be made of various existing materials that have a certain strength and can be used for nanofiltration and reverse osmosis membranes.

In the present invention, the bottom layer is a non-woven fabric, preferably polyester and/or polyethylene.

In the present invention, the porous support layer material is at least one selected from polyethersulfone, polysulfone, polyaryl ether, polybenzimidazole, polyether ketone, polyether ether ketone, polyacrylonitrile, polyvinylidene fluoride and polyaryletherketone.

In the present invention, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer, preferably at least one selected from a polyurea separation layer, a polytriazine amine separation layer, and a polysulfonamide separation layer.

Further, the acid- and alkali-resistant separation layer is formed by interfacial polymerization of the polyamine modified with halogenated quaternary ammonium salt and/or halogenated quaternary phosphonium salt, and the polyfunctional polar monomer.

According to the present invention, the polyfunctional polar monomer is at least one selected from polyisocyanate, a triazine compound containing at least two C-Cl bonds, and polysulfonyl chloride.

In the present invention, the polyamine reacts with at least one of the polyisocyanate, triazine compound containing at least two C-Cl bonds, and polysulfonyl chloride, introducing groups with strong conjugation effect and good chemical inertness into the nanofiltration membrane. The resulting polymer exhibits excellent structural stability in acidic or alkaline environments, which greatly improves the acid- and alkali-resistance of the nanofiltration membrane and makes it particularly suitable for acidic environments.

According to the present invention, the polyamine is at least one selected from polyethyleneimine, polyvinylamine, triethylenetetramine, tetraethylenepentamine, diethylenetriamine, polyethylenepolyamine, piperazine, m-phenylenediamine, and p-phenylenediamine; preferably polyethyleneimine and/or polyethylenepolyamine.

According to the present invention, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate.

According to the present invention, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride.

According to the present invention, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride.

In the present invention, the halogenated quaternary ammonium salt has a structure represented by Formula 1;

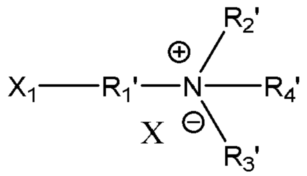

Formula 1;

wherein, $R_1$' is a substituted or unsubstituted C1-C9 alkylene group or phenylene group; $R_2$', $R_3$', $R_4$' are each independently selected from a C1-C3 alkyl group or phenyl group; X and $X_1$ are each independently a halogen.

Further, $R_1$' is a substituted or unsubstituted C1-C9 alkylene group or phenylene group, the substituent being a hydroxy, carboxyl, nitro, amino, silyl, carbonyl, ether or ester group; preferably, $R_1$' is an unsubstituted C1-C9 alkylene group or phenylene group; preferably, $R_1$ is a substituted or unsubstituted C1-C6 alkylene group or phenylene group; preferably, $R_1$ is an unsubstituted C1-C6 alkylene group or phenylene group; preferably, $R_1$ is a substituted or unsubstituted C1-C3 alkylene group; preferably, $R_1$ is an unsubstituted C1-C3 alkylene group.

Further, $R_2$', $R_3$', $R_4$' are each independently selected from a C1-C3 alkyl group; preferably, $R_2$', $R_3$', $R_4$' are each independently $CH_3$.

Further, X is Cl, Br or I.

Further, $X_1$ is Cl, Br or I.

In one specific embodiment of the present invention, R1' is an unsubstituted C1-C3 alkylene group.

In one specific embodiment of the present invention, R1' is a substituted C1-C3 alkylene group, wherein, the substituent is a hydroxy or carboxyl group, preferably a hydroxy group.

In one specific embodiment of the present invention, the halogenated quaternary ammonium salt is at least one selected from 2-chloroethyltrimethylammonium chloride, 2-chloroethyltriethylammonium chloride, 2-chloroethyltriphenylammonium chloride, 3-chloro-2-hydroxypropyltrimethylammonium chloride, 3-chloropropyltrimethylammonium chloride, 4-chlorobutyltrimethylammonium chloride, 5-chloropentyltrimethylammonium chloride, 6-chlorohexyltrimethylammonium chloride, 2-bromoethyltrimethylammonium bromide, 3-bromopropyltrimethylammonium bromide, 4-bromobutyltrimethylammonium bromide, 5-bromopentyltrimethylammonium bromide, 6-bromohexyltrimethylammonium bromide, iodomethyltrimethylammonium iodide, 2-iodoethyltrimethylammonium iodide, 3-iodopropyltrimethylammonium iodide, 4-iodobutyltrimethylammonium iodide, 5-iodopentyltrimethylammonium iodide, and 6-iodohexyltrimethylammonium iodide.

In the present invention, the halogenated quaternary phosphonium salt has a structure represented by Formula 2;

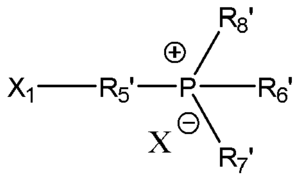

Formula 2;

wherein, $R_5$' is a C1-C6 alkylene group, phenylene group, or C7-C10 aralkylene group; $R_6$', $R_7$', $R_8$' are each independently a phenyl group or C7-C10 aralkyl group;
X and $X_1$ are each independently a halogen.

Further, $R_5$' is a C1-C3 alkylene group, phenylene group, or C8-C10 aralkylene group; preferably, $R_5$' is a C1-C3 alkylene group or C8-C10 aralkylene group.

Further, $R_6$', $R_7$', $R_8$' are each independently a phenyl group or C8-C10 aralkyl group; preferably, $R_6$', $R_7$', $R_8$' are each independently a phenyl group.

Further, X is Cl, Br or I.

Further, $X_1$ is F, Cl, Br or I.

In one specific embodiment of the present invention, the halogenated quaternary phosphonium salt is at least one selected from 3-bromopropyltriphenylphosphonium bromide, 2-bromoethyltriphenylphosphonium bromide, 1-bromoethyltriphenylphosphonium bromide, bromomethyltriphenylphosphonium bromide, 3-chloropropyltriphenylphosphonium chloride, 2-chloroethyltriphenylphosphonium chloride, 1-chloroethyltriphenylphosphonium chloride, chloromethyltriphenylphosphonium chloride, 3-iodopropyltriphenylphosphonium iodide, 2-iodoethyltriphenylphosphonium iodide, 1-iodoethyltriphenylphosphonium iodide, iodomethyltriphenylphosphonium bromide, 4-bromomethylbenzyltriphenylphosphonium bromide, 2-bromomethylbenzyltriphenylphosphonium bromide, 3-bromomethylbenzyltriphenylphosphonium bromide, 4-chloromethylbenzyltriphenylphosphonium chloride, 2-chloromethylbenzyltriphenylphosphonium chloride, 3-chloromethylbenzyltriphenylphosphonium chloride, 4-iodomethylbenzyltriphenylphosphonium iodide, 2-iodomethylbenzyltriphenylphosphonium iodide, and 3-iodomethylbenzyltriphenylphosphonium iodide; preferably 3-bromopropyltriphenylphosphonium bromide and/or 4-bromomethylbenzyltriphenylphosphonium bromide.

According to the present invention, there is no particular limitation on the thicknesses of the bottom layer, porous support layer, and acid- and alkali-resistant separation layer, and they can be conventional selections in the art. However, to enable the three layers to achieve better synergistic cooperation and allow the obtained positively charged acid- and alkali-resistant composite nanofiltration membrane to better combine excellent magnesium-lithium separation coefficient and high water flux, it is preferred that the thickness of the bottom layer is 30-150 μm, preferably 50-120 μm; the thickness of the porous support layer is 10-100 μm, preferably 30-60 μm; the thickness of the acid- and alkali-resistant separation layer is 10-500 nm, preferably 50-300 nm.

In one embodiment of the present invention, a positively charged acid- and alkali-resistant composite nanofiltration membrane is provided, wherein the positively charged acid- and alkali-resistant composite nanofiltration membrane comprises a bottom layer, a porous support layer, and an acid- and alkali-resistant separation layer stacked in sequence;

wherein the acid- and alkali-resistant separation layer contains a quaternary ammonium salt structure.

In the present invention, the acid- and alkali-resistant separation layer of the positively charged acid- and alkali-resistant composite nanofiltration membrane contains a quaternary ammonium salt structure, which significantly increases the surface positive charge density of the membrane. The repulsion effect between the positive charges improves the retention effect of the positively charged acid- and alkali-resistant composite nanofiltration membrane on divalent iron ions, so that the ability of the membrane to retain divalent and higher valent metal cations is improved, while its high water flux being maintained.

According to the present invention, the quaternary ammonium salt structure comprises a structural formula represented by Formula III and/or a structural formula represented by Formula IV,

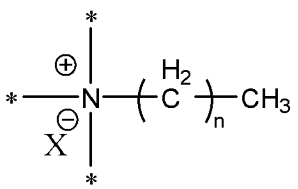
Formula III;

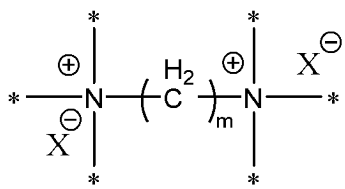
Formula IV;

wherein X is a halogen; n is an integer ranging from 0 to 10; m is an integer ranging from 2 to 10.

In the present invention, * refers to the site at which the quaternary ammonium salt structure is bonded to the non-H structural moiety in the acid- and alkali-resistant separation layer.

Further, X is Cl, Br or I.

Further, n is an integer ranging from 0 to 7; m is an integer ranging from 2 to 8.

According to the present invention, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer.

In the present invention, the specific acid- and alkali-resistant separation layer introduces inert chemical groups into the composite nanofiltration membrane, which improves the stability of the composite nanofiltration membrane, so that the composite nanofiltration membrane of the present invention can be applied in acidic/alkaline environments, expanding its scope of use.

Further, the acid- and alkali-resistant separation layer is at least one selected from a polyurea separation layer, a polytriazine amine separation layer, and a polysulfonamide separation layer.

In one embodiment, the positively charged acid- and alkali-resistant composite nanofiltration membrane is prepared by the preparation method described in the fourth aspect.

In Formulas III and IV, the N atom and the structural moiety connected to it via * are derived from the polymer in the acid- and alkali-resistant separation layer, and the $-(CH_2)_n-CH_3$ and $-(CH_2)_m-$ structural moieties are derived from halogenated alkanes.

According to the present invention, the content of nitrogen atoms in the quaternary ammonium salt structure of the positively charged acid- and alkali-resistant composite nanofiltration membrane is 0.5-5 at.%, for example, 1-4.5 at.%, 1.5-4 at.%.

In the present invention, when the content of nitrogen atoms in the quaternary ammonium salt structure falls within the above range, it indicates that the positively charged acid- and alkali-resistant composite nanofiltration membrane contains a relatively large number of quaternary ammonium salt groups, which enables the composite

nanofiltration membrane to have a high surface positive potential.

Further, the content of nitrogen atoms in the quaternary ammonium salt groups of the positively charged acid- and alkali-resistant composite nanofiltration membrane is 2-5 at.%.

In the present invention, the surface Zeta potential of the nanofiltration membrane refers to the surface Zeta potential at pH=7.

According to the present invention, the surface Zeta potential of the positively charged acid- and alkali-resistant composite nanofiltration membrane is 0-30 mV.

In the present invention, when the surface Zeta potential of the positively charged acid- and alkali-resistant composite nanofiltration membrane falls within the above range, it indicates that the composite nanofiltration membrane has a high surface electrode potential. When used for the separation of divalent and higher valent metal cations, the membrane can better repel metal cations, making it difficult for metal cations in the liquid to pass through the membrane, thereby achieving a high ability to retain divalent and higher valent metal cations.

Further, the surface Zeta potential of the positively charged acid- and alkali-resistant composite nanofiltration membrane is 5-20 mV.

According to the present invention, the average pore size of the positively charged acid- and alkali-resistant composite nanofiltration membrane is 0.1-0.5 nm.

In the present invention, the average pore size of the positively charged acid- and alkali-resistant composite nanofiltration membrane is tested by the PEG solute transport method.

In the present invention, when the average pore size of the positively charged acid- and alkali-resistant composite nanofiltration membrane falls within the above range, the membrane has high density, and can better repel divalent and higher valent metal cations, which makes it difficult for divalent and higher valent metal cations in the liquid to pass through the membrane, thereby achieving a high ability to retain divalent and higher valent metal cations.

Further, the average pore size of the positively charged acid- and alkali-resistant composite nanofiltration membrane is 0.15-0.3 nm.

According to the present invention, the contact angle of the positively charged acid- and alkali-resistant composite nanofiltration membrane is 20°-80°.

In the present invention, when the contact angle of the positively charged acid- and alkali-resistant composite nanofiltration membrane falls within the above range, it indicates that the surface of the membrane has good hydrophilicity, thereby achieving high water flux.

Further, the contact angle of the positively charged acid- and alkali-resistant composite nanofiltration membrane is 30°-60°.

In the present invention, there is no specific limitation on the bottom layer and porous support layer, and they can be made of various existing materials that have a certain strength and can be used for nanofiltration and reverse osmosis membranes.

In the present invention, the bottom layer is a non-woven fabric material, preferably polyester and/or polyethylene.

In the present invention, the porous support layer material can be at least one of polyethersulfone, polysulfone, polyaryl ether, polybenzimidazole, polyether ketone, polyether ether ketone, polyacrylonitrile, polyvinylidene fluoride, and polyaryletherketone.

According to the present invention, there is no particular limitation on the thicknesses of the bottom layer, porous support layer, and acid- and alkali-resistant separation layer, and they can be conventional selections in the art. However, to enable the three layers to achieve better synergistic cooperation and allow the obtained composite nanofiltration membrane to better combine excellent ability to retain divalent and higher valent metal cations and high water flux, it is preferred that the thickness of the bottom layer is 30-150 μm, preferably 50-120 μm; the thickness of the porous support layer is 10-100 μm, preferably 30-60 μm; the thickness of the acid- and alkali-resistant separation layer is 10-500 nm, preferably 50-300 nm.

In a particularly preferred embodiment, the thickness of the acid- and alkali-resistant separation layer is 120-180 nm.

In a second aspect, the present invention provides a method for preparing a positively charged acid- and alkali-resistant composite nanofiltration membrane, wherein the preparation method comprises the following steps:

S1. under stirring conditions, adding a first solution containing a halogenated quaternary ammonium salt and/or a halogenated quaternary phosphonium salt, and a catalyst to a second solution containing a polyamine, and carrying out a reaction to obtain a modified polyamine;

S2. preparing a porous support layer on a bottom layer;

S3. bringing the surface of the porous support layer into a first contact with an aqueous phase containing the modified polyamine obtained in step S1, and then a second contact with an organic phase containing a polyfunctional polar monomer, and performing heat treatment to obtain the positively charged acid- and alkali-resistant composite

nanofiltration membrane;

the halogenated quaternary ammonium salt has a structure represented by Formula 1; the halogenated quaternary phosphonium salt has a structure represented by Formula 2;

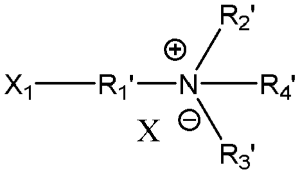 Formula 1; 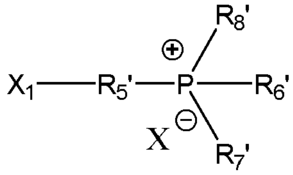 Formula 2;

wherein, $R_1$' is a substituted or unsubstituted C1-C9 alkylene group or phenylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group;
X and $X_1$ are each independently a halogen.

In the present invention, the polyamine is grafted with specific quaternary ammonium salt groups and/or quaternary phosphonium salt groups in the presence of an alkaline catalyst, to obtain a positively charged modified polyamine; the polyamine undergoes interfacial polymerization with the polar monomer, introducing groups with good chemical inertness, which improves the positive charge density and acid- and alkali-resistance on the surface of the nanofiltration membrane, so that the nanofiltration membrane can have a high magnesium-lithium separation coefficient while maintaining high water flux, and even in acidic or alkaline environments, it can still retain relatively high water flux and exhibit good magnesium-lithium separation performance.

Further, $R_1$' is a substituted or unsubstituted C1-C9 alkylene group or phenylene group, the substituent being a hydroxy, carboxyl, nitro, amino, silyl, carbonyl, ether or ester group; preferably, $R_1$' is an unsubstituted C1-C9 alkylene group or phenylene group; preferably, $R_1$' is a substituted or unsubstituted C1-C6 alkylene group or phenylene group; preferably, $R_1$' is an unsubstituted C1-C6 alkylene group or phenylene group; preferably, $R_1$' is a substituted or unsubstituted C1-C3 alkylene group; preferably, $R_1$' is an unsubstituted C1-C3 alkylene group.

Further, $R_2$', $R_3$', $R_4$' are each independently selected from a C1-C3 alkyl group; preferably, $R_2$', $R_3$', $R_4$' are each independently $CH_3$.

Further, $R_5$' is a C1-C3 alkylene group, phenylene group, or C8-C10 aralkylene group; preferably, $R_5$' is a C1-C3 alkylene group or C8-C10 aralkylene group.

Further, $R_6$', $R_7$', $R_8$' are each independently a phenyl group or C8-C10 aralkyl group; preferably, $R_6$', $R_7$', $R_8$' are each independently a phenyl group.

Further, $R_1$' is an unsubstituted C1-C3 alkylene group.

Further, $R_1$' is a substituted C1-C3 alkylene group, wherein, the substituent is a hydroxy or carboxyl group, preferably a hydroxy group.

Further, X is Cl, Br or I.

Further, $X_1$ is F, Cl, Br or I.

According to the present invention, the halogenated quaternary ammonium salt is at least one selected from 2-chloroethyltrimethylammonium chloride, 2-chloroethyltriethylammonium chloride, 2-chloroethyltriphenylammonium chloride, 3-chloro-2-hydroxypropyltrimethylammonium chloride, 3-chloropropyltrimethylammonium chloride, 4-chlorobutyltrimethylammonium chloride, 5-chloropentyltrimethylammonium chloride, 6-chlorohexyltrimethylammonium chloride, 2-bromoethyltrimethylammonium bromide, 3-bromopropyltrimethylammonium bromide, 4-bromobutyltrimethylammonium bromide, 5-bromopentyltrimethylammonium bromide, 6-bromohexyltrimethylammonium bromide, iodomethyltrimethylammonium iodide, 2-iodoethyltrimethylammonium iodide, 3-iodopropyltrimethylammonium iodide, 4-iodobutyltrimethylammonium iodide, 5-iodopentyltrimethylammonium iodide, and 6-iodohexyltrimethylammonium iodide; preferably 2-chloroethyltrimethylammonium chloride and/or 3-bromopropyltrimethylammonium bromide.

According to the present invention, the halogenated quaternary phosphonium salt is at least one selected from 3-bromopropyltriphenylphosphonium bromide, 2-bromoethyltriphenylphosphonium bromide, 1-bromoethyltriphenylphosphonium bromide, bromomethyltriphenylphosphonium bromide, 3-chloropropyltriphenylphosphonium chloride, 2-chloroethyltriphenylphosphonium chloride, 1-chloroethyltriphenylphosphonium chloride, chloromethyltriphenylphosphonium chloride, 3-iodopropyltriphenylphosphonium iodide, 2-iodoethyltriphenylphosphonium iodide, 1-iodoethyltriphenylphosphonium iodide, iodomethyltriphenylphosphonium bromide, 4-bromomethylbenzyltriphenylphosphonium bromide, 2-bromomethylbenzyltriphenylphosphonium bromide, 3-bromomethylbenzyltriphenylphosphonium bromide, 4-chloromethylbenzyltriphenylphosphonium chloride, 2-chloromethylbenzyltriphenylphosphonium chloride, 3-chloromethylbenzyltriphenylphosphonium chloride, 4-iodomethylbenzyltriphenylphosphonium iodide, 2-iodomethylbenzyltriphenylphosphonium iodide, and 3-iodomethylbenzyltriphenylphosphonium iodide; preferably 3-bromopropyltriphenylphosphonium bromide and/or 4-bromomethylbenzyltriphenylphosphonium bromide.

According to the present invention, the concentration of the halogenated quaternary ammonium salt and/or halogenated quaternary phosphonium salt in the first solution is 0.5 wt%-20 wt%.

In the present invention, when the concentration of the halogenated quaternary ammonium salt and/or halogenated quaternary phosphonium salt in the first solution in step S1 is controlled to fall within the above range, the prepared positively charged acid- and alkali-resistant composite nanofiltration membrane has a high magnesium-lithium separation coefficient. Meanwhile, the quaternary ammonium salt groups and/or quaternary phosphonium salt groups grafted on the surface of the acid- and alkali-resistant separation layer will not excessively affect the water flux of the membrane, thus maintaining good water flux.

In the present invention, if the concentration of the halogenated quaternary ammonium salt and/or halogenated quaternary phosphonium salt in the first solution in step S1 is lower than the above range, the halogenated quaternary ammonium salt and/or halogenated quaternary phosphonium salt in the first solution cannot fully react with the polyamine in the second solution; if the concentration of the halogenated quaternary ammonium salt and/or halogenated quaternary phosphonium salt in the first solution in step S1 is higher than the above range, the halogenated quaternary ammonium salt and/or halogenated quaternary phosphonium salt will excessively consume the amino groups of the polyamine structure in the second solution, resulting in insufficient density of the separation layer formed by interfacial polymerization in step S3.

Further, the concentration of the halogenated quaternary ammonium salt and/or halogenated quaternary phosphonium salt in the first solution is 1 wt%-10 wt%.

According to the present invention, the catalyst is at least one selected from sodium hydroxide, potassium hydroxide, potassium carbonate, sodium carbonate, sodium bicarbonate, potassium bicarbonate, disodium hydrogen phosphate, and dipotassium hydrogen phosphate; preferably potassium hydroxide.

According to the present invention, the concentration of the catalyst in the first solution is 0.01 wt%-5 wt%.

In the present invention, when the concentration of the catalyst in the first solution in step S1 is controlled to fall within the above range, it can ensure that the halogenated quaternary ammonium salt and/or halogenated quaternary phosphonium salt in the first solution react fully with the polyamine in the second solution at a high reaction rate, thereby introducing the quaternary ammonium salt and/or quaternary phosphonium salt structure into the molecular structure of the polyamine within a short period of time.

Further, the concentration of the catalyst in the first solution is 0.1 wt%-1 wt%.

According to the present invention, in step S1, the polyamine is at least one selected from polyethyleneimine, triethylenetetramine, tetraethylenepentamine, diethylenetriamine, polyethylenepolyamine, piperazine, m-phenylenediamine, and p-phenylenediamine; preferably polyethyleneimine and/or polyethylenepolyamine.

According to the present invention, the concentration of the polyamine in the second solution is 1 wt%-20 wt%, preferably 5 wt%-10 wt%.

According to the present invention, the amounts of the first solution and the second solution are such that the mass ratio of the polyamine, the halogenated quaternary ammonium salt and/or halogenated quaternary phosphonium salt, and the catalyst is 1-1000:1-100:1.

In the present invention, when the mass ratio of the polyamine, the halogenated quaternary ammonium salt and/or halogenated quaternary phosphonium salt, and the catalyst is controlled to fall within the above range, it can ensure that the halogenated quaternary ammonium salt and/or halogenated quaternary phosphonium salt in the first solution react fully with the polyamine in the second solution at a high reaction rate and efficiency, thereby introducing more quaternary phosphonium salt and/or quaternary ammonium salt structures into the polyamine within a short period of time.

Further, the amounts of the first solution and the second solution are such that the mass ratio of the polyamine, the halogenated quaternary ammonium salt and/or halogenated quaternary phosphonium salt, and the catalyst is 1-200:1-50:1.

According to the present invention, in step S1, the reaction conditions include: a reaction temperature of 25-90°C and a reaction time of 1-48 h.

In the present invention, when the reaction conditions in step S1 are controlled to fall within the above range, it can ensure that the halogenated quaternary ammonium salt and/or halogenated quaternary phosphonium salt in the first solution react fully with the polyamine in the second solution at a high reaction rate and efficiency, thereby introducing more quaternary phosphonium salt and/or quaternary ammonium salt structures into the polyamine within a short period of time.

Further, in step S1, the reaction conditions include: a reaction temperature of 40-60°C and a reaction time of 6-24 h.

In a preferred embodiment of the present invention, the first solution is added dropwise to the second solution containing the polyamine. Adding the first solution dropwise to the second solution containing the polyamine can control the reaction rate, ensure sufficient mixing of the first solution and the second solution, and guarantee the full reaction between the halogenated quaternary ammonium salt and/or halogenated quaternary phosphonium salt and the polyamine.

According to the present invention, the dropping rate is 0.5-5 mL/min, preferably 1-3 mL/min.

In the present invention, there is no special limitation on the method for preparing the porous support layer on the bottom layer in step S2. Conventional methods in the art can be used, and a phase inversion method is preferred, which specifically comprises coating a polymer solution of the porous support layer material on one surface of the bottom layer, to obtain the porous support layer through phase inversion.

In the present invention, the phase inversion method can preferably be carried out as follows: the support layer polymer material is dissolved in a solvent to obtain a polymer solution with a concentration of 10-20 wt%, and defoamed at 20-40°C for 10-180 min; then the polymer solution is coated on the bottom layer to form an initial membrane, which is immediately immersed in water at 10-30°C for 10-60 min, and the porous membrane of the support layer polymer is obtained through the phase inversion layer.

Wherein, the solvent can be at least one of N,N-dimethylformamide, N,N-dimethylacetamide, N-methylpyrrolidone, and dimethyl sulfoxide.

In the present invention, the acid- and alkali-resistant separation layer is formed by interfacial polymerization of the polyamine modified with halogenated quaternary ammonium salt and/or halogenated quaternary phosphonium salt, and the polyfunctional polar monomer.

According to the present invention, the polyfunctional polar monomer is at least one selected from polyisocyanate, a triazine compounds containing at least two C-Cl bonds, and polysulfonyl chloride.

According to the present invention, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate.

According to the present invention, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride.

According to the present invention, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride.

According to the present invention, the concentration of the modified polyamine in the aqueous phase is 0.1 wt%-10 wt%, preferably 0.5 wt%-2.5 wt%.

According to the present invention, the concentration of the polyfunctional polar monomer in the organic phase is 0.01 wt%-2 wt%, preferably 0.05 wt%-1 wt%.

In the present invention, there is no special limitation on the type of the solvent for the organic phase, as long as it can dissolve the polyacyl chloride. Preferably, the solvent for the organic phase is one or more of n-hexane, dodecane, n-heptane, and alkane solvent oils (Isopar E, Isopar G, Isopar H, Isopar L, and Isopar M).

In the present invention, in step S3, there is no special limitation on the interfacial polymerization conditions between the modified polyamine and the polyfunctional polar monomer, and conventional conditions in the art can be used. However, to enable the three layers to achieve better synergistic cooperation and allow the obtained positively charged acid- and alkali-resistant composite nanofiltration membrane to better combine excellent magnesium-lithium separation coefficient and high water flux, it is preferred that the first contact time is 5-100 s, preferably 10-60 s; the second contact time is 10-200 s, preferably 20-120 s; the heat treatment conditions include: a heat treatment temperature of 40-150°C, preferably 50-120°C; and a heat treatment time of 0.5-10 min, preferably 1-5 min.

In a third aspect, the present invention provides a method for preparing the positively charged acid- and alkali-resistant composite nanofiltration membrane, wherein the preparation method comprises the following steps:

S1': sequentially preparing a porous support layer and an acid- and alkali-resistant separation layer on a bottom layer to obtain a composite membrane;

S2': bringing the composite membrane into contact with an aqueous solution containing a catalyst, a halogenated quaternary ammonium salt and/or a halogenated quaternary phosphonium salt, and drying, to obtain the positively charged acid- and alkali-resistant composite nanofiltration membrane.

In the present invention, the positively charged acid- and alkali-resistant composite nanofiltration membrane contains chemically inert groups, enabling its application in acidic/alkaline environments. By grafting specific quaternary ammonium salt groups and/or quaternary phosphonium salt groups, the nanofiltration membrane achieves high retention rates for divalent and higher valent metal ions while maintaining high water flux.

In the present invention, the ratio of the amount of the aqueous solution containing the catalyst, halogenated quaternary ammonium salt and/or halogenated quaternary phosphonium salt to the membrane area of the composite membrane is 0.1-1 g/$cm^2$, preferably 0.3-0.5 g/$cm^2$.

In the present invention, there is no specific limitation on the bottom layer and the porous support layer. They are made of various existing materials that have a certain strength and can be used for nanofiltration and reverse osmosis membranes.

In the present invention, the bottom layer is a non-woven fabric, preferably polyester and/or polyethylene.

In the present invention, the porous support layer material is at least one selected from polyethersulfone, polysulfone, polyaryl ether, polybenzimidazole, polyether ketone, polyether ether ketone, polyacrylonitrile, polyvinylidene fluoride, and polyaryletherketone.

In the present invention, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer, preferably at least one of a polyurea separation layer, a polytriazine amine separation layer and a polysulfonamide separation layer.

Further, the acid- and alkali-resistant separation layer is formed by interfacial polymerization of the polyamine and the polyfunctional polar monomer.

In the present invention, the interfacial polymerization process includes: first bringing the surface of the porous support layer into a first contact with an aqueous phase containing the polyamine, and then a second contact with an organic phase containing the polyfunctional polar monomer, and performing heat treatment.

In one embodiment of the present invention, step S1' includes:

S1-1': preparing a porous support layer on the bottom layer; and

S1-2': first bringing the surface of the porous support layer into a first contact with an aqueous phase containing the polyamine, and then a second contact with an organic phase containing the polyfunctional polar monomer, and performing heat treatment to obtaining the composite membrane.

The reaction conditions for the above-mentioned first contact, second contact, and heat treatment are conventional in the art. It is preferred that the first contact time is 5-100 s, preferably 10-60 s; the temperature of the first contact is 15-50°C, preferably 20-40°C; the second contact time is 10-200 s, preferably 20-120 s; the temperature of the second contact is 15-40°C, preferably 20-30°C; the heat treatment conditions include: a heat treatment time of 0.5-10 min, preferably 1-5 min; and a heat treatment temperature of 40-150°C, preferably 50-120°C.

According to the present invention, the polyfunctional polar monomer is at least one selected from polyisocyanate, a triazine compound containing at least two C-Cl bonds, and polysulfonyl chloride.

The polyamine reacts with at least one of the polyisocyanate, triazine compound containing at least two C-Cl bonds, and polysulfonyl chloride, introducing groups with strong conjugation effect and good chemical inertness into the nanofiltration membrane. The polymer contained in the resulting acid- and alkali-resistant separation layer exhibits excellent structural stability in acidic or alkaline environments, which greatly improves the acid- and alkali-resistance of the nanofiltration membrane and makes it particularly suitable for acidic environments.

According to the present invention, the polyamine is at least one selected from polyethyleneimine, polyvinylamine, triethylenetetramine, tetraethylenepentamine, diethylenetriamine, polyethylenepolyamine, piperazine, m-phenylenediamine, and p-phenylenediamine; preferably polyethyleneimine and/or polyethylenepolyamine.

According to the present invention, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate.

According to the present invention, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride.

According to the present invention, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride.

According to the present invention, the weight ratio of the polyamine in the aqueous phase to the polyfunctional polar monomer in the organic phase is 2-200:1, preferably 5-80:1.

According to the present invention, the concentration of the polyamine in the aqueous phase is 0.1 wt%-10 wt%, preferably 0.5 wt%-2.5 wt%.

According to the present invention, the concentration of the polyfunctional polar monomer in the organic phase is 0.01 wt%-2 wt%, preferably 0.05 wt%-1 wt%.

In the present invention, the ratio of the amount of the aqueous phase containing the polyamine to the membrane area of the porous support layer is 0.05-0.5 g/cm$^2$, preferably 0.1-0.3 g/cm$^2$.

In the present invention, the ratio of the amount of the organic phase containing the polyfunctional polar monomer to the membrane area of the porous support layer is 0.03-0.3 g/cm$^2$, preferably 0.05-0.2 g/cm$^2$.

According to the present invention, wherein, the halogenated quaternary ammonium salt has a structure represented by Formula 1; the halogenated quaternary phosphonium salt has a structure represented by Formula 2;

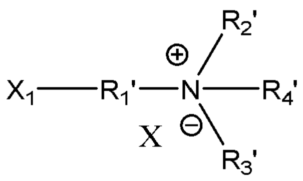 Formula 1; 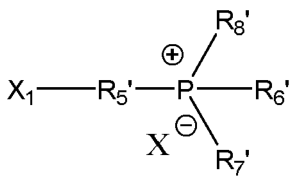 Formula 2;

wherein, $R_1$' is a substituted or unsubstituted C1-C9 alkylene group; preferably, $R_1$' is an unsubstituted C1-C9 alkylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group;

X and $X_1$ are each independently a halogen.

Further, $R_1$' is a substituted or unsubstituted C1-C9 alkylene group or phenylene group, the substituent being a hydroxy, carboxyl, nitro, amino, silyl, carbonyl, ether or ester group; preferably, $R_1$' is an unsubstituted C1-C9 alkylene group or phenylene group; preferably, $R_1$' is a substituted or unsubstituted C1-C6 alkylene group or phenylene group; preferably, $R_1$' is an unsubstituted C1-C6 alkylene group or phenylene group; preferably, $R_1$' is a substituted or unsubstituted C1-C3 alkylene group; preferably, $R_1$' is an unsubstituted C1-C3 alkylene group.

Further, $R_2$', $R_3$', $R_4$' are each independently selected from a C1-C3 alkyl group; preferably, $R_2$', $R_3$', $R_4$' are each independently $CH_3$.

Further, $R_5$' is a C1-C3 alkylene group, phenylene group, or C8-C10 aralkylene group; preferably, $R_5$' is a C1-C3 alkylene group or C8-C10 aralkylene group.

Further, $R_6$', $R_7$', $R_8$' are each independently a phenyl group or C8-C10 aralkyl group; preferably, $R_6$', $R_7$', $R_8$' are each independently a phenyl group.

Further, $R_1$' is an unsubstituted C1-C3 alkylene group.

Further, $R_1$' is a substituted C1-C3 alkylene group, wherein, the substituent is a hydroxy or carboxyl group, preferably a hydroxy group.

Further, X is Cl, Br or I.

Further, $X_1$ is F, Cl, Br or I.

In one specific embodiment of the present invention, in Formula 1, $R_1$' is ethylene,

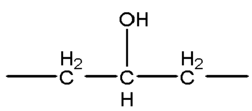,

propylene, butylene, pentylene or hexylene; $R_2$', $R_3$', $R_4$' are methyl, ethyl or phenyl; X is Cl, Br or I.

In one specific embodiment of the present invention, in Formula 2, $R_5$' is propylene, ethylene, methylene or

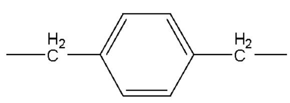;

$R_6$', $R_7$', $R_8$' are phenyl; X is Cl, Br or I.

According to the present invention, in step S2', the contact method is a common contact method in the art, preferably immersion.

According to the present invention, the contact time is 10 s-10 min; the contact temperature is 20-80°C.

In the present invention, when the contact conditions are controlled to fall within the above range, it can ensure the sufficient reaction of the halogenated quaternary ammonium salt and/or halogenated quaternary phosphonium salt on the membrane surface, increasing the positive charge density on the membrane surface, thereby enabling the nanofiltration membrane to maintain high water flux while having good ability to retain divalent and higher valent metal ions. Additionally, the process is compatible with existing industrial continuous production processes and suitable for scaled-up preparation.

Further, the contact time is 20 s-1 min; the contact temperature is 30-50°C.

According to the present invention, the drying time is 0.5-10 min; the drying temperature is 40-80°C.

In the present invention, when the drying conditions are controlled to fall within the above range, it can promote the further progress of the grafting reaction of the halogenated quaternary ammonium salt and/or halogenated quaternary phosphonium salt on the surface of the acid- and alkali-resistant separation layer, further increasing the positive charge density on the membrane surface, thereby further improving the ability of the nanofiltration membrane to retain divalent and higher valent metal ions while ensuring high water flux. Meanwhile, the process is compatible with existing industrial continuous production processes and suitable for scaled-up preparation.

Further, the drying time is 3-5 min; the drying temperature is 50-70°C.

According to the present invention, in step S2', the catalyst is at least one selected from sodium hydroxide, potassium hydroxide, potassium carbonate, sodium carbonate, sodium bicarbonate, potassium bicarbonate, disodium hydrogen phosphate, and dipotassium hydrogen phosphate; preferably potassium hydroxide.

According to the present invention, the halogenated quaternary ammonium salt is at least one selected from 2-chloroethyltrimethylammonium chloride, 2-chloroethyltriethylammonium chloride, 2-chloroethyltriphenylammonium chloride, 3-chloro-2-hydroxypropyltrimethylammonium chloride, 3-chloropropyltrimethylammonium chloride, 4-chlorobutyltrimethylammonium chloride, 5-chloropentyltrimethylammonium chloride, 6-chlorohexyltrimethylammonium chloride, 2-bromoethyltrimethylammonium bromide, 3-bromopropyltrimethylammonium bromide, 4-bromobutyltrimethylammonium bromide, 5-bromopentyltrimethylammonium bromide, 6-bromohexyltrimethylammonium bromide, iodomethyltrimethylammonium iodide, 2-iodoethyltrimethylammonium iodide, 3-iodopropyltrimethylammonium iodide, 4-iodobutyltrimethylammonium iodide, 5-iodopentyltrimethylammonium iodide, and 6-iodohexyltrimethylammonium iodide; preferably 2-chloroethyltrimethylammonium chloride and/or 3-bromopropyltrimethylammonium bromide.

According to the present invention, the halogenated quaternary phosphonium salt is at least one selected from 3-bromopropyltriphenylphosphonium bromide, 2-bromoethyltriphenylphosphonium bromide, 1-bromoethyltriphenylphosphonium bromide, bromomethyltriphenylphosphonium bromide, 3-chloropropyltriphenylphosphonium chloride, 2-chloroethyltriphenylphosphonium chloride, 1-chloroethyltriphenylphosphonium chloride, chloromethyltriphenylphosphonium chloride, 3-iodopropyltriphenylphosphonium iodide, 2-iodoethyltriphenylphosphonium iodide, 1-iodoethyltriphenylphosphonium iodide, iodomethyltriphenylphosphonium bromide, 4-bromomethylbenzyltriphenylphosphonium bromide, 2-bromomethylbenzyltriphenylphosphonium bromide, 3-bromomethylbenzyltriphenylphosphonium bromide, 4-chloromethylbenzyltriphenylphosphonium chloride, 2-chloromethylbenzyltriphenylphosphonium chloride, 3-chloromethylbenzyltriphenylphosphonium chloride, 4-iodomethylbenzyltriphenylphosphonium iodide, 2-iodomethylbenzyltriphenylphosphonium iodide, and 3-iodomethylbenzyltriphenylphosphonium iodide; preferably 3-bromopropyltriphenylphosphonium bromide and/or 4-bromomethylbenzyltriphenylphosphonium bromide.

According to the present invention, the concentration of the catalyst in the aqueous solution is 0.01 wt%-5 wt%.

**In** the present invention, when the concentration of the catalyst in the aqueous solution is controlled to fall within the above range, the grafting reaction of the halogenated quaternary ammonium salt and/or halogenated quaternary phosphonium salt on the membrane surface can proceed more fully. At the same time, it avoids the waste of the catalyst and improves the economic efficiency of the process.

Further, the concentration of the catalyst in the aqueous solution is 0.1 wt%-1 wt%.

According to the present invention, the concentration of the halogenated quaternary ammonium salt and/or halogenated quaternary phosphonium salt in the aqueous solution is 1 wt%-20 wt%.

**In** the present invention, when the concentration of the halogenated quaternary ammonium salt and/or halogenated quaternary phosphonium salt in the aqueous solution is controlled to fall within the above range, it can ensure the sufficient grafting of the halogenated quaternary ammonium salt and/or halogenated quaternary phosphonium salt on the membrane surface, increasing the surface charge density of the positively charged acid- and alkali-resistant composite nanofiltration membrane, thereby improving the retention rate of the nanofiltration membrane for divalent and higher valent metal ions. Meanwhile, it avoids waste and enhances the economic efficiency of the process.

Further, the concentration of the halogenated quaternary ammonium salt and/or halogenated quaternary phosphonium salt in the aqueous solution is 5 wt%-10 wt%.

In one embodiment of the present invention, a positively charged acid- and alkali-resistant composite nanofiltration membrane prepared by the preparation method described in the third aspect is provided.

According to the present invention, the positively charged acid- and alkali-resistant composite nanofiltration membrane sequentially comprises a bottom layer, a porous support layer, and an acid- and alkali-resistant separation

layer;

wherein, the acid- and alkali-resistant separation layer is grafted with a quaternary ammonium salt group represented by Formula I and/or a quaternary phosphonium salt group represented by Formula II via N atoms;

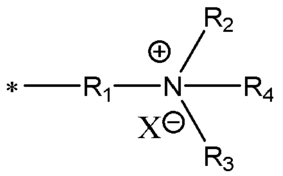 Formula I; 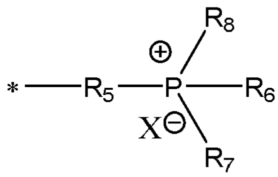 Formula II;

wherein, $R_1$ is a substituted or unsubstituted C1-C9 alkylene group or phenylene group; $R_2$, $R_3$, and $R_4$ are each independently selected from a C1-C3 alkyl group or phenyl group; $R_5$ is a C1-C6 alkylene group, phenylene group, or C7-C10 aralkylene group; $R_6$, $R_7$, and $R_8$ are each independently a phenyl group or C7-C10 aralkyl group; X is a halogen.

Further, $R_1$ is a substituted or unsubstituted C1-C9 alkylene group or phenylene group, the substituent being a carboxyl, nitro, amino, silyl, carbonyl, ether or ester group; preferably, $R_1$ is an unsubstituted C1-C9 alkylene group or phenylene group; preferably, $R_1$ is a substituted or unsubstituted C1-C6 alkylene group or phenylene group; preferably, $R_1$ is an unsubstituted C1-C6 alkylene group or phenylene group; preferably, $R_1$ is a substituted or unsubstituted C1-C3 alkylene group; preferably, $R_1$ is an unsubstituted C1-C3 alkylene group.

Further, $R_2$, $R_3$, $R_4$ are each independently selected from a C1-C3 alkyl group; preferably, $R_2$, $R_3$, $R_4$ are each independently $CH_3$.

Further, $R_5$ is a C1-C3 alkylene group, phenylene group, or C8-C10 aralkylene group; preferably, $R_5$ is a C1-C3 alkylene group or C8-C10 aralkylene group.

Further, $R_6$, $R_7$, $R_8$ are each independently a phenyl group or C8-C10 aralkyl group; preferably, $R_6$, $R_7$, $R_8$ are each independently a phenyl group.

Further, X is Cl, Br or I.

In one embodiment, the positively charged acid- and alkali-resistant composite nanofiltration membrane is prepared by the preparation method described in the third aspect.

According to the present invention, the content of nitrogen atoms in the quaternary ammonium salt groups of the positively charged acid- and alkali-resistant composite nanofiltration membrane is 0.5-6 at.%, for example, 1-5.5 at.%, 1.5-5 at.%.

In the present invention, when the content of nitrogen atoms in the quaternary ammonium salt groups of the positively charged acid- and alkali-resistant composite nanofiltration membrane falls within the above range, the membrane has a high surface electrode potential and a small average pore size, which enables the membrane to exhibit good retention performance for divalent and higher valent heavy metal cations. Meanwhile, the grafting of the quaternary ammonium salt groups represented by Formula I onto the acid- and alkali-resistant separation layer via nitrogen atoms will not excessively affect the water flux of the membrane.

Further, the content of nitrogen atoms in the positively charged acid- and alkali-resistant composite nanofiltration membrane is 2-5 at.%.

According to the present invention, the content of phosphorus atoms in the positively charged acid- and alkali-resistant composite nanofiltration membrane is 0.4-3 at.%, for example, 0.4-2.5 at.%, 0.8-2.2 at.%.

In the present invention, when the content of phosphorus atoms in the positively charged acid- and alkali-resistant composite nanofiltration membrane falls within the above range, the membrane has a high surface electrode potential and a small average pore size, which enables the membrane to exhibit good retention performance for divalent and higher valent heavy metal cations. Meanwhile, the grafting of the quaternary phosphonium salt groups represented by Formula II onto the acid- and alkali-resistant separation layer via nitrogen atoms will not excessively affect the water flux of the membrane, and the membrane can maintain good separation efficiency.

Further, the content of phosphorus atoms in the positively charged acid- and alkali-resistant composite nanofiltration membrane is 0.5-2 at.%.

According to the present invention, the surface Zeta potential of the positively charged acid- and alkali-resistant composite nanofiltration membrane is 0-30 mV.

In the present invention, the surface Zeta potential of the positively charged acid- and alkali-resistant composite nanofiltration membrane refers to the surface Zeta potential at pH=7.

In the present invention, when the surface Zeta potential of the positively charged acid- and alkali-resistant composite nanofiltration membrane falls within the above range, it indicates that the composite nanofiltration membrane

has a high surface electrode potential. When used for separating higher valent heavy metal ions in acidic or alkaline environments, the membrane can better repel higher valent heavy metal ions, making it difficult for such ions in the liquid to pass through the nanofiltration membrane, thereby realizing effective recovery of higher valent heavy metal cations.

Further, the surface Zeta potential of the positively charged acid- and alkali-resistant composite nanofiltration membrane is 5-20 mV.

According to the present invention, the average pore size of the positively charged acid- and alkali-resistant composite nanofiltration membrane is 0.1-0.5 nm.

In the present invention, when the average pore size of the positively charged acid- and alkali-resistant composite nanofiltration membrane falls within the above range, it indicates that the membrane has high density. When used for separating higher valent heavy metal ions in acidic or alkaline environments, the membrane can better repel higher valent heavy metal ions, making it difficult for such ions in the liquid to pass through the nanofiltration membrane, thus achieving high separation efficiency for higher valent heavy metal ions.

Further, the average pore size of the positively charged acid- and alkali-resistant composite nanofiltration membrane is 0.15-0.3 nm.

According to the present invention, the contact angle of the positively charged acid- and alkali-resistant composite nanofiltration membrane is 30-80°.

In the present invention, the positively charged acid- and alkali-resistant composite nanofiltration membrane has a contact angle within the range specified in the present invention, which indicates that the membrane has excellent hydrophilicity and thus can maintain high water flux.

Further, the contact angle of the positively charged acid- and alkali-resistant composite nanofiltration membrane is 30-60°.

In the present invention, there is no specific limitation on the bottom layer and the porous support layer. They are made of various existing materials that have a certain strength and can be used for nanofiltration and reverse osmosis membranes.

In the present invention, the bottom layer is a non-woven fabric, preferably polyester and/or polyethylene.

In the present invention, the porous support layer material is at least one selected from polyethersulfone, polysulfone, polyaryl ether, polybenzimidazole, polyether ketone, polyether ether ketone, polyacrylonitrile, polyvinylidene fluoride, and polyaryletherketone.

In the present invention, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer.

According to the present invention, there is no particular limitation on the thicknesses of the bottom layer, porous support layer, and acid- and alkali-resistant separation layer, and they can be conventional selections in the art. However, to enable the three layers to achieve better synergistic cooperation and allow the obtained positively charged acid- and alkali-resistant composite nanofiltration membrane to better combine excellent separation coefficient for high valence heavy metal ions and high water flux, it is preferred that the thickness of the bottom layer is 30-150 μm, preferably 50-120 μm; the thickness of the porous support layer is 10-100 μm, preferably 30-60 μm; the thickness of the acid- and alkali-resistant separation layer is 10-500 nm, preferably 50-300 nm.

In a fourth aspect, the present invention provides a method for preparing a positively charged acid- and alkali-resistant composite nanofiltration membrane, wherein the preparation method comprises the following steps:

S1": preparing a porous support layer on a bottom layer;

S2": sequentially bringing the membrane layer obtained in step S1" into a first contact with an aqueous phase of a polyamine containing a tertiary amine group, and a second contact with an organic phase containing a polyfunctional polar monomer, and performing heat treatment to obtain a composite nanofiltration membrane including an acid- and alkali-resistant separation layer;

S3": bringing the composite nanofiltration membrane into a third contact with an organic solution containing a halogenated alkane and a catalyst, and drying to obtain the positively charged acid- and alkali-resistant composite nanofiltration membrane.

In the present invention, the composite nanofiltration membrane is brought into contact with an organic solution containing a halogenated alkane and a catalyst. Under the action of the catalyst, the halogenated alkane undergoes a chemical reaction with the tertiary amine in the acid- and alkali-resistant separation layer, converting the tertiary amine into positively charged quaternary ammonium salt groups. The repulsion effect between positive charges improves the ability of the positively charged acid- and alkali-resistant composite nanofiltration membrane to retain divalent and higher valent metal cations, while also enabling the membrane to maintain high water flux.

In the present invention, there is no special limitation on the method for preparing the porous support layer on the

bottom layer. Conventional methods in the art can be used, and a phase inversion method is preferred, which specifically comprises coating a polymer solution of the porous support layer material on one surface of the bottom layer, to obtain the porous support layer through phase inversion.

In the present invention, the phase inversion method can preferably be carried out as follows: the support layer polymer material is dissolved in a solvent to obtain a polymer solution with a concentration of 10-20 wt%, and defoamed at 20-40°C for 10-180 min; then the polymer solution is coated on the bottom layer to form an initial membrane, which is immediately immersed in water at 10-30°C for 10-60 min, and the porous membrane of the support layer polymer is obtained through the phase inversion layer.

Wherein, the solvent can be at least one of N,N-dimethylformamide, N,N-dimethylacetamide, N-methylpyrrolidone, and dimethyl sulfoxide.

According to the present invention, in step S2", the polyamine containing the tertiary amine group is at least one selected from polyethyleneimine, polyethylenepolyamine, 1-aminopiperazine, 1,4-diaminopiperazine, 1,4-piperazinediethylamine, and 1,4-bis(aminopropyl)piperazine, preferably polyethyleneimine and/or polyethylenepolyamine.

According to the present invention, in the aqueous phase of the polyamine containing the tertiary amine group, the concentration of the polyamine containing the tertiary amine group is 0.1 wt%-10 wt%, preferably 0.5 wt%-2.5 wt%.

According to the present invention, the polyfunctional polar monomer is at least one selected from polyisocyanate, a triazine compound containing at least two C-Cl bonds, and polysulfonyl chloride.

According to the present invention, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate.

According to the present invention, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride.

According to the present invention, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride.

According to the present invention, the concentration of the polyfunctional polar monomer in the organic phase is 0.01 wt%-2 wt%, preferably 0.05 wt%-1 wt%.

According to the present invention, the amounts of the aqueous phase of the polyamine containing the tertiary amine group and the organic phase containing the polyfunctional polar monomer are such that the weight ratio of the polyamine containing the tertiary amine group to the polyfunctional polar monomer is 2-200:1.

In the present invention, when the weight ratio of the polyamine containing the tertiary amine group to the polyfunctional polar monomer is controlled to fall within the above range, it can ensure the sufficient interfacial polymerization reaction between the polyamine containing the tertiary amine group and the polyfunctional polar monomer, thereby increasing the cross-linking density of the prepared acid- and alkali-resistant separation layer.

Further, the amounts of the aqueous phase of the polyamine containing the tertiary amine group and the organic phase containing the polyfunctional polar monomer are such that the weight ratio of the polyamine containing the tertiary amine group to the polyfunctional polar monomer is 5-80:1.

In the present invention, there is no special limitation on the type of the solvent in the organic phase containing the polyfunctional polar monomer, as long as it can dissolve the polyfunctional polar monomer. Preferably, the solvent for the organic phase is one or more of n-hexane, dodecane, n-heptane, and alkane solvent oils (Isopar E, Isopar G, Isopar H, Isopar L, and Isopar M).

According to the present invention, there is no special limitation on the interfacial polymerization conditions between the polyamine containing the tertiary amine group and the polyfunctional polar monomer, and conventional conditions in the art can be used. However, to enable the three layers to achieve better synergistic cooperation and allow the obtained composite nanofiltration membrane to better combine excellent ability to retain divalent and higher valent metal cations and high water flux, it is preferred that the first contact time is 5-100 s, preferably 10-60 s; the second contact time is 10-200 s, preferably 20-120 s; the heat treatment conditions include: a heat treatment temperature of 40-150°C, preferably 50-120°C; and a heat treatment time of 0.5-10 min, preferably 1-5 min.

In the present invention, in step S2", the ratio of the volume of the aqueous phase solution of the polyamine containing the tertiary amine group to the membrane area of the membrane layer obtained in step S1" is 0.05-1 $mL/cm^2$, preferably 0.1-0.5 $mL/cm^2$.

In the present invention, in step S2", the ratio of the volume of the organic phase solution containing the

polyfunctional polar monomer to the membrane area of the membrane layer obtained in step S1" is 0.25-0.5 mL/$cm^2$, preferably 0.05-0.3 mL/$cm^2$.

According to the present invention, in step S3", the halogenated alkane is selected from a halogenated alkane represented by Formula 3 and/or a halogenated alkane represented by Formula 4;

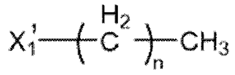 Formula 3, 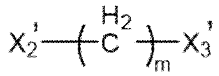 Formula 4;

$X_1$', $X_2$' and $X_3$' are each independently a halogen; n is an integer ranging from 0 to 10; m is an integer ranging from 2 to 10.

The use of the halogenated alkane with the above-mentioned specific structure can further increase the positive charge density on the surface of the positively charged composite nanofiltration membrane, and further reduce the average pore size of the nanofiltration membrane.

Further, $X_1$', $X_2$' and $X_3$' are each independently Cl, Br or I.

Further, n is an integer ranging from 0 to 7; m is an integer ranging from 2 to 8.

According to the present invention, the halogenated alkane is at least one selected from methyl iodide, ethyl iodide, propyl iodide, butyl iodide, pentyl iodide, hexyl iodide, heptyl iodide, octyl iodide, nonyl iodide, decyl iodide, cyclopropyl iodide, cyclobutyl iodide, cyclopentyl iodide, cycloheptyl iodide, cyclooctyl iodide, 1,2-diiodoethane, 1,3-diiodopropane, 1,4-diiodobutane, 1,5-diiodopentane, 1,6-diiodohexane, 1,7-diiodoheptane, 1,8-diiodooctane, methyl chloride, ethyl chloride, propyl chloride, butyl chloride, pentyl chloride, hexyl chloride, heptyl chloride, octyl chloride, nonyl chloride, decyl chloride, cyclopropyl chloride, cyclobutyl chloride, cyclopentyl chloride, cycloheptyl chloride, cyclooctyl chloride, 1,2-dichloroethane, 1,3-dichloropropane, 1,4-dichlorobutane, 1,5-dichloropentane, 1,6-dichlorohexane, 1,7-dichloroheptane, 1,8-dichlorooctane, methyl bromide, ethyl bromide, propyl bromide, butyl bromide, pentyl bromide, hexyl bromide, heptyl bromide, octyl bromide, nonyl bromide, decyl bromide, cyclopropyl bromide, cyclobutyl bromide, cyclopentyl bromide, cycloheptyl bromide, cyclooctyl bromide, 1,2-dibromoethane, 1,3-dibromopropane, 1,4-dibromobutane, 1,5-dibromopentane, 1,6-dibromohexane, 1,7-dibromoheptane and 1,8-dibromooctane, preferably at least one selected from ethyl bromide, propyl chloride and methyl iodide.

In the present invention, to ensure that the halogenated alkane can react with the residual tertiary amine groups in the acid- and alkali-resistant separation layer, the catalyst is an alkaline catalyst. Further, the catalyst is at least one selected from sodium hydroxide, potassium hydroxide, potassium carbonate, sodium carbonate, sodium bicarbonate, potassium bicarbonate, potassium tert-butoxide and sodium tert-butoxide, preferably selected from sodium hydroxide and/or sodium tert-butoxide.

According to the present invention, the organic solution is an alcohol solvent. There is no specific limitation on the specific type of the alcohol solvent, for example, it can be one of methanol, ethanol, n-butanol and isopropanol, preferably methanol or ethanol.

According to the present invention, in step S3", the concentration of the halogenated alkane in the organic solution is 1 wt%-20 wt%.

In the present invention, when the concentration of the halogenated alkane in the organic solution in step S3" is controlled to fall within the above range, it can ensure that the halogenated alkane is in full contact with the acid- and alkali-resistant separation layer in the composite nanofiltration membrane, which allows the residual tertiary amine groups on the surface of the acid- and alkali-resistant separation layer to fully react with the halogenated alkane at high reaction efficiency, and finally results in the surface of the prepared positively charged acid- and alkali-resistant composite nanofiltration membrane containing a relatively large number of quaternary ammonium salt groups.

Further, in step S3", the concentration of the halogenated alkane in the organic solution is 5 wt%-10 wt%.

According to the present invention, the concentration of the catalyst is 0.01 wt%-5 wt%.

In the present invention, when the concentration of the catalyst falls within the above range, it can promote a more sufficient reaction between the halogenated alkane and the tertiary amine groups on the surface of the composite nanofiltration membrane, introducing a specific content of quaternary ammonium salt groups. Moreover, it avoids the waste of the catalyst and improves the economic efficiency.

Further, the concentration of the catalyst is 0.1 wt%-1 wt%.

According to the present invention, the weight ratio of the halogenated alkane to the catalyst is 2-50: 1.

Further, the weight ratio of the halogenated alkane to the catalyst is 5-30:1.

According to the present invention, the ratio of the volume of the organic solution to the membrane area of the composite nanofiltration membrane is 0.1-1 mL/$cm^2$.

In the present invention, by controlling the ratio of the volume of the organic solution to the membrane area of the composite nanofiltration membrane to fall within the above range, it can ensure that the halogenated alkane is in full

contact with the acid- and alkali-resistant separation layer in the composite nanofiltration membrane. This ensures high reaction efficiency between the halogenated alkane and the tertiary amine groups in the acid- and alkali-resistant separation layer, and finally makes the surface of the prepared positively charged acid- and alkali-resistant composite nanofiltration membrane contain a relatively large number of quaternary ammonium salt groups.

Further, the ratio of the volume of the organic solution to the membrane area of the composite nanofiltration membrane is 0.3-0.5 mL/$cm^2$.

According to the present invention, the conditions for the third contact include: a third contact time of 1-120 min.

In the present invention, when the contact time between the composite nanofiltration membrane and the organic solution containing the halogenated alkane and the catalyst is controlled to fall within the above range, it can ensure that the halogenated alkane fully reacts with the residual tertiary amine groups on the surface of the acid- and alkali-resistant separation layer, resulting in the surface of the prepared positively charged composite nanofiltration membrane containing a relatively large number of quaternary ammonium salt groups.

Further, the conditions for the third contact include: a third contact time of 5-60 min.

In the present invention, there is no specific limitation on the temperature for the first contact, the second contact and the third contact, for example, it can be room temperature (20-30°C).

According to the present invention, the drying conditions include: a drying temperature of 30-80°C and a drying time of 0.5-5 min.

Further, the drying conditions include: a drying temperature of 40-60°C and a drying time of 1-3 min.

In a fifth aspect, the present invention provides a positively charged acid- and alkali-resistant composite nanofiltration membrane prepared by the above-mentioned preparation method.

In a sixth aspect, the present invention provides a use of the above-mentioned positively charged acid- and alkali-resistant composite nanofiltration membrane in a field of water treatment, especially of water treatment and separation.

In the present invention, the metal cation retention rate of the positively charged acid- and alkali-resistant composite nanofiltration membrane is ≥85%, preferably ≥87%, preferably ≥89%, preferably ≥91%, preferably ≥93%, preferably ≥95%; the water flux is ≥20 LMH, preferably ≥22 LMH, preferably ≥24 LMH, preferably ≥26 LMH.

In the present invention, especially for the positively charged acid- and alkali-resistant composite nanofiltration membrane prepared by the preparation method in the second aspect, its $MgCl_2$ desalination rate is ≥88%, preferably ≥90%; its LiCl desalination rate is ≥26%, preferably ≥28%; its Magnesium-Lithium separation coefficient is 10-90, preferably 25-86; and its water flux is ≥22 LMH, preferably ≥25 LMH.

In the present invention, especially for the positively charged acid- and alkali-resistant composite nanofiltration membrane prepared by the preparation method in the third aspect, its $NiCl_2$ retention rate is ≥85%, preferably ≥89%; its $CuCl_2$ retention rate is ≥88%, preferably ≥88.5%; and its water flux is ≥22 LMH, preferably ≥24 LMH.

In the present invention, especially for the positively charged acid- and alkali-resistant composite nanofiltration membrane prepared by the preparation method in the fourth aspect, its $Fe^{2+}$ retention rate is ≥90%, preferably ≥93%; its $H^+$ permeability is 84-93%, preferably 88-91%; and its water flux is ≥20 LMH, preferably ≥22 LMH.

Other features and advantages of the present invention will be described in detail in the subsequent specific embodiments.

The present invention will be described in detail below with reference to examples.

(1) The water flux of the nanofiltration membrane was tested by the following method: The nanofiltration membrane was mounted in a membrane cell, and pre-pressurized at 1.5 MPa for 1 h, then the water permeation volume of the nanofiltration membrane was tested within a certain period of time under the conditions of a pressure of 2 MPa and a temperature of 25°C, and the water flux was calculated using the following formula:
$J=Q/(A \cdot t)$, wherein, J is the water flux; Q is the water permeation volume (L); A is the effective filtration area ($m^2$) of the nanofiltration membrane; and t is the time (h).

(2) The desalination rate of the nanofiltration membrane for magnesium chloride or lithium chloride was tested by the following method: The nanofiltration membrane was mounted in a membrane cell, and pre-pressurized at 1.5 MPa for 1 h, then the concentration changes of salts in the raw aqueous solution with an initial concentration of 2000 ppm and the permeate were tested within 1 h under the conditions of a pressure of 2 MPa and a temperature of 25°C, and the desalination rate was calculated using the following formula:
$R=(C_f-C_p)/C_f \times 100\ \%$ , wherein, R is the desalination rate; $C_f$ is the concentration of magnesium chloride or lithium chloride in the raw aqueous solution (tested by a conductivity meter); and $C_p$ is the concentration of magnesium chloride or lithium chloride in the permeate.

The retention rate of the nanofiltration membrane for $NiCl_2$ or $CuCl_2$ was tested by the following method: The nanofiltration membrane was mounted in a membrane cell, and pre-pressurized at 1.5 MPa for 1 h, then the concentration changes of salts in the raw aqueous solution with an initial concentration of 2000 ppm and the permeate were tested within 1 h under the conditions of a pressure of 2 MPa and a temperature of 25°C, and the retention rate was calculated using the

following formula:
$R=(C_f-C_p)/C_f\times 100\ \%$ , wherein, R is the retention rate; $C_f$ is the concentration of $NiCl_2$ or $CuCl_2$ in the raw aqueous solution (tested by a conductivity meter); and $C_p$ is the concentration of $NiCl_2$ or $CuCl_2$ in the permeate.

The retention rate of the nanofiltration membrane for divalent $Fe^{2+}$ and the permeation rate for $H^+$ were tested by the following method: The nanofiltration membrane was mounted in a membrane cell, with a mixed solution of 0.2 wt% $FeSO_4$ and 5% $H_2SO_4$ as the raw aqueous solution, and pre-pressurized at 1.5 MPa for 1 h, and then the concentrations of $Fe^{2+}$ and $H^+$ in the raw aqueous solution and the permeate were tested after 1 h under the conditions of a pressure of 2 MPa and a temperature of 25°C, respectively.

The retention rate of the membrane for divalent $Fe^{2+}$ was calculated using the formula: $R=(C_f-C_p)/C_f\times 100\%$, wherein, R is the retention rate; $C_f$ is the concentration of $Fe^{2+}$ in the raw aqueous solution; and $C_p$ is the concentration of $Fe^{2+}$ in the permeate. The permeation rate for $H^+$ was calculated using the formula: $T=C_p'/C_f' \times 100\%$, wherein, $C_p'$ is the concentration of $H^+$ in the permeate, and $C_f'$ is the concentration of $H^+$ in the raw aqueous solution.

(3) The magnesium-lithium separation coefficient of the nanofiltration membrane was tested by the following method: The nanofiltration membrane was mounted in a membrane cell, with a mixed solution of 2000 ppm magnesium chloride and 100 ppm lithium chloride as the raw aqueous solution, and pre-pressurized at 1.5 MPa for 1 h, a permeate was obtained under the conditions of a pressure of 2 MPa and a temperature of 25°C, then the mass concentrations of magnesium ions and lithium ions in the raw aqueous solution and the permeate were tested by ion chromatography, and the magnesium-lithium separation coefficient was calculated using the following formula:

$$S=\frac{C_{Mg,f}/C_{Li,f}}{C_{Mg,p}/C_{Li,p}}$$

wherein, S is the magnesium-lithium separation coefficient, $C_{Mg,f}$ and $C_{Li,f}$ are the mass concentrations of magnesium ions and lithium ions in the raw aqueous solution (tested by ion chromatography), respectively; $C_{Mg,p}$ and $C_{Li,p}$ are the mass concentrations of magnesium ions and lithium ions in the permeate (tested by ion chromatography), respectively.

(4) Acid resistance test method of the nanofiltration membrane: The nanofiltration membrane sheet was immersed in a 5 wt% HCl solution for 7 days, taken out and rinsed thoroughly, then the changes in the water flux, the magnesium-lithium separation coefficient or the retention rate of high-valent heavy metal ions of the nanofiltration membrane were tested.

Alkali resistance test method of the nanofiltration membrane: The nanofiltration membrane sheet was immersed in a 10 wt% NaOH solution for 30 days, taken out and rinsed thoroughly with deionized water, then the changes in the water flux, the magnesium-lithium separation coefficient or the retention rate of high-valent heavy metal ions of the nanofiltration membrane were tested.

(5) Determination of the surface contact angle of the nanofiltration membrane

A DSA100 surface contact angle measuring instrument produced by KRUSS, Germany, was used to test the surface contact angle of the composite membrane sample by the sessile drop method. Before the test, the sample was dried in a vacuum oven at 60°C for 30 min to remove the water on its surface and inside. Then the dried membrane was attached to a flat glass slide with double-sided tape. During the test, the volume of each water drop was 2 $\mu$L, and the test was performed immediately 3 seconds after the water drop was placed on the membrane surface. The final contact angle was determined by taking the average value of multiple tests.

(6) Determination of the nitrogen content in the quaternary ammonium salt groups and the phosphorus content in the nanofiltration membrane:
Before the test, the sample was dried in an oven to constant weight. A Sigma Probe X-ray photoelectron spectrometer produced by Thermo VG, UK, was used to determine the surface element composition of the composite membrane sample. For samples containing the quaternary ammonium salt groups, the molar content of nitrogen atoms in the quaternary ammonium salt groups is equal to the molar content of the corresponding halogens, so the nitrogen content in the quaternary ammonium salt groups can be determined by the tested halogen content; the phosphorus content in the quaternary phosphonium salts of the nanofiltration membrane can be directly tested by XPS spectrum.

(7) The nitrogen content in the quaternary ammonium salt structure of the nanofiltration membrane was tested by the following method:

Before the test, the nanofiltration membrane was dried in an oven to constant weight. A Sigma Probe X-ray

photoelectron spectrometer produced by Thermo VG, UK, was used to determine the surface element composition of the nanofiltration membrane. The nitrogen content in the quaternary ammonium salt structure of the acid- and alkali-resistant separation layer was calculated by the following formula:

$$N^{+}at.\% = \frac{A_{N}^{+}}{A_{N}} \times S_{N}$$

wherein, $A_N^+$ represents the peak area of nitrogen atoms in the quaternary ammonium salt structure in the XPS spectrum (the peak area at the bond energy of 403 eV in Figure 3); $A_N$ represents the peak area of nitrogen atoms in the separation layer in the XPS spectrum (the sum of the peak areas at 403 eV and 399 eV in Figure 3); $S_N$ represents the atomic content (at.%) of nitrogen atoms in the quaternary ammonium salt groups of the acid- and alkali-resistant positively charged composite nanofiltration membrane.

(8) Pore size test of the nanofiltration membrane: The test was conducted by the PEG solute transfer method, the detailed steps of which were as follows:

(i) The retention rate of the nanofiltration membrane for PEG with different molecular sizes was tested;
(ii) Linear fitting of PEG size and retention rate was performed in a log-probability coordinate system, wherein the PEG size corresponding to 50% retention rate was the average pore size of the nanofiltration membrane.

(9) Surface Zeta potential test of the nanofiltration membrane: The test was conducted by a Surpass electric analyzer (Anton Paar), wherein the circulating solution was a dilute aqueous KCl solution, and the pH of the test solution was 7.

(10) The thickness of each layer in the nanofiltration membrane was tested by a micrometer screw gauge.

In addition, in the following examples and comparative examples:
Branched polyethyleneimine (weight-average molecular weight: 25000 g/mol), polyethylenepolyamine, 1,4-phenylene diisocyanate, cyanuric chloride, 1,3-benzenedisulfonyl chloride, 2-chloroethyltrimethylammonium chloride, 3-bromopropyltriphenylphosphonium bromide, 4-bromomethylbenzyltriphenylphosphonium bromide, chloromethyltriphenylphosphonium chloride, 2-chloroethyltrimethylammonium chloride, 3-bromopropyltrimethylammonium bromide, iodomethyltrimethylammonium iodide, 1,4-diaminopiperazine, 1,4-cyclohexanediamine, bromoethane, chloropropane, iodomethane, bromohexane, iodohexane, 1,3-dibromopropane, tetradecyl bromide, etc., were all purchased from J&K Scientific Co., Ltd. Other chemical reagents were purchased from Sinopharm Chemical Reagent Co., Ltd.

The support layer was prepared by the phase inversion method, the specific steps of which were as follows:
A certain amount of polysulfone (number-average molecular weight: 80000 g/mol) was dissolved in N,N-dimethylformamide to prepare a 18 wt% polysulfone solution, followed by degassing at 25°C for 120 min; then, the polysulfone solution was applied onto a polyester non-woven fabric (with a thickness of 75 μm) using a scraper to obtain an initial membrane, then the initial membrane was immersed in water at 25°C for 60 min so that the polysulfone layer on the surface of the polyester non-woven fabric became a porous membrane through phase inversion, followed by washing with water three times to finally obtain a bottom layer-porous support layer with a total thickness of 115 μm.

Example A1

(1) 5 g of polyethyleneimine was dissolved in 100 g of deionized water, and heated to 60°C under stirring conditions; 10 g of an aqueous solution containing 5 wt% of 3-bromopropyltriphenylphosphonium bromide (where $X_1$ and X are Br, $R_5$' is propylene, and $R_6$', $R_7$', $R_8$' are phenyl groups) and 1 wt% of potassium hydroxide was added dropwise into the solution at a rate of 2 mL/min. After the completion of dropwise addition, while maintaining the temperature at 60°C, the reaction was continued for 24 h. The mass ratio of polyamine, halogenated quaternary phosphonium salt and catalyst was 5:0.5:0.1 = 50:5:1.
(2) The obtained phosphonium salt-modified polyethyleneimine aqueous solution was diluted with water to adjust its concentration to 0.5 wt%. The upper surface of a polysulfone support layer with an area of 400 $cm^2$ was brought into contact with 50 mL of the prepared 0.5 wt% phosphonium salt-modified polyethyleneimine aqueous solution, and the solution was drained after 60 s of contact at 25°C; then, the upper surface of the support layer was brought into contact with 30 mL of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain the positively charged acid- and alkali-resistant composite nanofiltration membrane AN1.

The infrared spectrum of the positively charged acid- and alkali-resistant composite nanofiltration membrane AN1 is shown in Figure 1. It can be seen from Figure 1 that there is a characteristic peak of the C-P bond at 1113 $cm^{-1}$. This peak indicates that the phosphonium group in the 3-bromopropyltriphenylphosphonium bromide structure has been successfully grafted onto the surface of the nanofiltration membrane, thereby enhancing the positive charge property of the surface of the positively charged acid- and alkali-resistant composite nanofiltration membrane and improving the magnesium-lithium separation performance of the membrane.

Example A2

The preparation method was the same as that of Example A1, except that "polyethylene polyamine" was used instead of "polyethyleneimine", to obtain the positively charged acid- and alkali-resistant composite nanofiltration membrane AN2.

Example A3

The preparation method was the same as that of Example A1, except that "4-bromomethylbenzyltriphenylphosphonium bromide (where $X_1$ and X are Br, $R_5$' is C1 arylmethyl, and $R_6$', $R_7$', $R_8$' are phenyl groups)" was used instead of "3-bromopropyltriphenylphosphonium bromide", to obtain the positively charged acid- and alkali-resistant composite nanofiltration membrane AN3.

Example A4

The preparation method was the same as that of Example A1, except that "chloromethyltriphenylphosphonium chloride (where $R_5$' is methylene, $R_6$', $R_7$', $R_8$' are phenyl groups, and $X_1$ and X are Cl)" was used instead of "3-bromopropyltriphenylphosphonium bromide", to obtain the positively charged acid- and alkali-resistant composite nanofiltration membrane AN4.

Example A5

(1) 5 g of polyethyleneimine was dissolved in 100 g of deionized water, and heated to 60°C under stirring conditions; 10 g of an aqueous solution containing 5 wt% of 2-chloroethyltrimethylammonium chloride (where X and $X_1$ are Cl, $R_1$' is ethylene, and $R_2$', $R_3$', $R_4$' are methyl groups) and 1 wt% of potassium hydroxide was added dropwise into the solution at a rate of 2 mL/min. After the completion of dropwise addition, while maintaining the temperature at 60°C, the reaction was continued for 24 h. The mass ratio of polyamine, halogenated quaternary ammonium salt and catalyst was 5:0.5:0.1 = 50:5:1.

(2) The obtained quaternary ammonium salt-modified polyethyleneimine aqueous solution was diluted with water to adjust its concentration to 0.5 wt%. The upper surface of a polysulfone support layer with an area of 400 $cm^2$ was brought into contact with 50 mL of the prepared 0.5 wt% quaternary ammonium salt-modified polyethyleneimine aqueous solution, and the solution was drained after 60 s of contact at 25°C; then, the upper surface of the support layer was brought into contact with 30 mL of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain the positively charged acid- and alkali-resistant composite nanofiltration membrane AN5.

Example A6

The preparation method was the same as that of Example A5, except that "3-bromopropyltrimethylammonium bromide (where X and $X_1$ are Br, $R_1$' is propylene, and $R_2$', $R_3$', $R_4$' are methyl groups)" was used instead of "2-chloroethyltrimethylammonium chloride", to obtain the positively charged acid- and alkali-resistant composite nanofiltration membrane AN6.

Example A7

The preparation method was the same as that of Example A5, except that "iodomethyltrimethylammonium iodide (where X and $X_1$ are I, $R_1$' is methylene, and $R_2$', $R_3$', $R_4$' are methyl groups)" was used instead of "2-chloroethyltrimethylammonium chloride", to obtain the positively charged acid- and alkali-resistant composite nanofiltration membrane

AN7.

Example A8

(1) 5 g of polyethyleneimine was dissolved in 100 g of deionized water, and heated to 60°C under stirring conditions; 10 g of an aqueous solution containing 5 wt% of 3-bromopropyltriphenylphosphonium bromide and 1 wt% of potassium hydroxide was added dropwise into the solution at a rate of 2 mL/min. After the completion of dropwise addition, while maintaining the temperature at 60°C, the reaction was continued for 24 h.
(2) The obtained quaternary phosphonium salt-modified polyethyleneimine aqueous solution was diluted with water to adjust its concentration to 2 wt%. The upper surface of a polysulfone support layer with an area of 400 $cm^2$ was brought into contact with 50 mL of the prepared 2 wt% quaternary phosphonium salt-modified polyethyleneimine aqueous solution, and the solution was drained after 60 s of contact at 25°C; then, the upper surface of the support layer was brought into contact with 30 mL of an Isopar E solution containing 0.05 wt% of cyanuric chloride, and the solution was drained after 60 s of contact at 25°C; subsequently, the membrane was placed in an oven and heated at 70°C for 3 min to obtain the positively charged acid- and alkali-resistant composite nanofiltration membrane AN8.

Example A9

(1) 5 g of polyethyleneimine was dissolved in 100 g of deionized water, and heated to 60°C under stirring conditions; 10 g of an aqueous solution containing 5 wt% of 3-bromopropyltriphenylphosphonium bromide and 1 wt% of potassium hydroxide was added dropwise into the solution at a rate of 2 mL/min. After the completion of dropwise addition, while maintaining the temperature at 60°C, the reaction was continued for 24 h.
(2) The obtained quaternary phosphonium salt-modified polyethyleneimine aqueous solution was diluted with water to adjust its concentration to 2 wt%. The upper surface of a polysulfone support layer with an area of 400 $cm^2$ was brought into contact with 50 mL of the prepared 2 wt% quaternary phosphonium salt-modified polyethyleneimine aqueous solution, and the solution was drained after 60 s of contact at 25°C; then, the upper surface of the support layer was brought into contact with 30 mL of an Isopar E solution containing 0.2 wt% of 1,3-benzenedisulfonyl chloride, and the solution was drained after 60 s of contact at 25°C; subsequently, the membrane was placed in an oven and heated at 70°C for 3 min to obtain the positively charged acid- and alkali-resistant composite nanofiltration membrane AN9.

Example A10

The preparation method was the same as that of Example A1, except that "10 g of an aqueous solution containing 0.5 wt% of 3-bromopropyltriphenylphosphonium bromide was added dropwise into the solution at a rate of 2 mL/min" was used instead of "10 g of an aqueous solution containing 5 wt% of 3-bromopropyltriphenylphosphonium bromide was added dropwise into the solution at a rate of 2 mL/min", to obtain the positively charged acid- and alkali-resistant composite nanofiltration membrane AN10.

Example A11

The preparation method was the same as that of Example A1, except that "10 g of an aqueous solution containing 8 wt% of 3-bromopropyltriphenylphosphonium bromide was added dropwise into the solution at a rate of 2 mL/min" was used instead of" 10 g of an aqueous solution containing 5 wt% of 3-bromopropyltriphenylphosphonium bromide was added dropwise into the solution at a rate of 2 mL/min", to obtain the positively charged acid- and alkali-resistant composite nanofiltration membrane AN11.

Example A12

The preparation method was the same as that of Example A1, except that "10 g of an aqueous solution containing 0.2 wt% of 3-bromopropyltriphenylphosphonium bromide was added dropwise into the solution at a rate of 2 mL/min" was used instead of "10 g of an aqueous solution containing 5 wt% of 3-bromopropyltriphenylphosphonium bromide was added dropwise into the solution at a rate of 2 mL/min", to obtain the positively charged acid- and alkali-resistant composite nanofiltration membrane AN12.

Example A13

The preparation method was the same as that of Example A1, except that "10 g of an aqueous solution containing 5 wt% of 3-bromopropyltriphenylphosphonium bromide and 0.05 wt% of potassium hydroxide was added dropwise into the solution at a rate of 2 mL/min" was used instead of "10 g of an aqueous solution containing 5 wt% of 3-bromopropyltriphenylphosphonium bromide and 1 wt% of potassium hydroxide was added dropwise into the solution at a rate of 2 mL/min", to obtain the positively charged acid- and alkali-resistant composite nanofiltration membrane AN13. The mass ratio of polyamine, halogenated quaternary phosphonium salt and catalyst was 5:0.5:0.005 = 1000:100:1.

Example A14

The preparation method was the same as that of Example A1, except that "10 g of an aqueous solution containing 5 wt% of 3-bromopropyltriphenylphosphonium bromide and 0.5 wt% of potassium hydroxide was added dropwise into the solution at a rate of 2 mL/min" was used instead of "10 g of an aqueous solution containing 5 wt% of 3-bromopropyltriphenylphosphonium bromide and 1 wt% of potassium hydroxide was added dropwise into the solution at a rate of 2 mL/min", to obtain the positively charged acid- and alkali-resistant composite nanofiltration membrane AN14. The mass ratio of polyamine, halogenated quaternary phosphonium salt and catalyst was 5:0.5:0.05 = 100:10:1.

Example A15

The preparation method was the same as that of Example A1, except that "10 g of an aqueous solution containing 5 wt% of 3-bromopropyltriphenylphosphonium bromide and 0.005 wt% of potassium hydroxide was added dropwise into the solution at a rate of 2 mL/min" was used instead of "10 g of an aqueous solution containing 5 wt% of 3-bromopropyltriphenylphosphonium bromide and 1 wt% of potassium hydroxide was added dropwise into the solution at a rate of 2 mL/min", to obtain the positively charged acid- and alkali-resistant composite nanofiltration membrane AN15. The mass ratio of polyamine, halogenated quaternary phosphonium salt and catalyst was 5:0.5:0.0005 = 10000:1000:1.

Example A16

The preparation method was the same as that of Example A1, except that "10 g of an aqueous solution containing 2.5 wt% of 3-bromopropyltriphenylphosphonium bromide and 2.5 wt% of 2-chloroethyltrimethylammonium chloride was added dropwise into the solution at a rate of 2 mL/min" was used instead of "10 g of an aqueous solution containing 5 wt% of 3-bromopropyltriphenylphosphonium bromide was added dropwise into the solution at a rate of 2 mL/min", to obtain the positively charged acid- and alkali-resistant composite nanofiltration membrane AN16. The mass ratio of polyamine, halogenated quaternary ammonium salt, halogenated quaternary phosphonium salt and catalyst was 5:0.5:0.1 = 50:5: 1.

Comparative Example A1

5 g of polyethyleneimine was dissolved in 100 g of deionized water. The upper surface of the above-mentioned polysulfone support layer with an area of 400 $cm^2$ was brought into contact with 50 mL of an aqueous solution containing 0.5 wt% polyethyleneimine, and the solution was drained after 60 s of contact at 25°C; then, the upper surface of the support layer was brought into contact with 30 mL of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain the nanofiltration membrane AD1.

Comparative Example A2

5 g of polyethyleneimine was dissolved in 100 g of deionized water. The upper surface of the above-mentioned polysulfone support layer with an area of 400 $cm^2$ was brought into contact with 50 mL of an aqueous solution containing 2 wt% polyethyleneimine, and the solution was drained after 60 s of contact at 25°C; then, the upper surface of the support layer was brought into contact with 30 mL of an Isopar E solution containing 0.05 wt% of cyanuric chloride, and the solution was drained after 60 s of contact at 25°C; subsequently, the membrane was placed in an oven and heated at 70°C for 3 min to obtain the nanofiltration membrane AD2.

Comparative Example A3

5 g of polyethyleneimine was dissolved in 100 g of deionized water. The upper surface of the above-mentioned polysulfone support layer with an area of 400 $cm^2$ was brought into contact with 50 mL of an aqueous solution containing 2

wt% polyethyleneimine, and the solution was drained after 60 s of contact at 25°C; then, the upper surface of the support layer was brought into contact with 30 mL of an Isopar E solution containing 0.2 wt% of 1,3-benzenedisulfonyl chloride, and the solution was drained after 60 s of contact at 25°C; subsequently, the membrane was placed in an oven and heated at 70°C for 3 min to obtain the nanofiltration membrane AD3.

Comparative Example A4

The upper surface of a polysulfone support layer with an area of 400 $cm^2$ was brought into contact with 50 g of an aqueous solution containing 0.5 wt% polyethyleneimine, and the solution was drained after 60 s of contact at 25°C; then, the upper surface of the support layer was brought into contact with 30 g of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain the composite membrane A1.

At 30°C, the above composite membrane A1 was immersed in an aqueous solution containing 150 g of 10 wt% of 2,3-epoxypropyltrimethylammonium chloride (epoxy quaternary ammonium salt) and 5 wt% of 2,4,6-tris(dimethylaminomethyl)phenol (catalyst). After 1 min, the membrane was taken out and dried at 70°C for 5 min to obtain the epoxy quaternary ammonium salt-modified acid- and alkali-resistant positively charged nanofiltration membrane AD4.

Comparative Example A5

5 g of polyethyleneimine was dissolved in 100 g of deionized water, and heated to 60°C under stirring conditions; 10 g of an ethanol solution containing 5 wt% of benzyl chloride was added dropwise into the solution at a rate of 2 mL/min. After the completion of dropwise addition, while maintaining the temperature at 60°C, the reaction was continued for 24 h.

The obtained quaternized modified polyethyleneimine aqueous solution was diluted with water to adjust its concentration to 0.5 wt%. The upper surface of a polysulfone support layer with an area of 400 $cm^2$ was brought into contact with 50 mL of the prepared 0.5 wt% quaternized modified polyethyleneimine aqueous solution, and the solution was drained after 60 s of contact at 25°C; then, the upper surface of the support layer was brought into contact with 30 mL of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain the positively charged acid- and alkali-resistant composite nanofiltration membrane AD5.

The positively charged acid- and alkali-resistant composite nanofiltration membranes prepared in the examples and the nanofiltration membranes prepared in the comparative examples were tested for their thicknesses, with the results shown in Table 1.

The positively charged acid- and alkali-resistant composite nanofiltration membranes prepared in the examples and the nanofiltration membranes prepared in the comparative examples were tested for their surface Zeta potential, average pore size, content of nitrogen atoms in the quaternary ammonium salt groups, content of phosphorus atoms and contact angle, with the results shown in Table 2.

The positively charged acid- and alkali-resistant composite nanofiltration membranes prepared in the examples and the nanofiltration membranes prepared in the comparative examples were tested for their water flux, desalination rate for magnesium chloride and lithium chloride, and magnesium-lithium separation coefficient. After the positively charged acid- and alkali-resistant composite nanofiltration membranes prepared in the examples and the nanofiltration membranes prepared in the comparative examples were subjected to acid treatment, their magnesium-lithium separation coefficient and water flux were tested. The results are shown in Table 3.

Table 1

| | Thickness of the bottom layer (μm) | Thickness of the porous support layer (μm) | Thickness of the acid- and alkali-resistant separation layer (nm) |
|---|---|---|---|
| AN1 | 75 | 40 | 127 |
| AN2 | 75 | 40 | 125 |
| AN3 | 75 | 40 | 132 |
| AN4 | 75 | 40 | 129 |
| AN5 | 75 | 40 | 134 |
| AN6 | 75 | 40 | 133 |
| AN7 | 75 | 40 | 126 |
| AN8 | 75 | 40 | 154 |

(continued)

| | Thickness of the bottom layer (μm) | Thickness of the porous support layer (μm) | Thickness of the acid- and alkali-resistant separation layer (nm) |
|---|---|---|---|
| AN9 | 75 | 40 | 172 |
| AN10 | 75 | 40 | 137 |
| AN11 | 75 | 40 | 125 |
| AN12 | 75 | 40 | 139 |
| AN13 | 75 | 40 | 137 |
| AN14 | 75 | 40 | 131 |
| AN15 | 75 | 40 | 138 |
| AN16 | 75 | 40 | 132 |
| AD1 | 75 | 40 | 127 |
| AD2 | 75 | 40 | 125 |
| AD3 | 75 | 40 | 132 |
| AD4 | 75 | 40 | 135 |
| Notes: The thickness of the acid- and alkali-resistant separation layer mentioned herein refers to that of the acid- and alkali-resistant separation layer grafted with quaternary ammonium salt groups/quaternary phosphonium salt groups. | | | |

Table 2

| | Surface Zeta potential (mV) | Average pore size (nm) | Content of nitrogen atoms[a] (at.%) | Content of phosphorus atoms[b] (at.%) | Contact angle (°) |
|---|---|---|---|---|---|
| AN1 | 24.6 | 0.19 | - | 1.8 | 47 |
| AN2 | 23.1 | 0.18 | - | 1.6 | 52 |
| AN3 | 17.6 | 0.21 | - | 1.2 | 48 |
| AN4 | 16.9 | 0.22 | - | 0.9 | 51 |
| AN5 | 23.2 | 0.19 | 13.4 | - | 37 |
| AN6 | 21.5 | 0.22 | 12.1 | - | 36 |
| AN7 | 19.7 | 0.23 | 11.8 | - | 38 |
| AN8 | 20.5 | 0.17 | - | 1.5 | 56 |
| AN9 | 19.6 | 0.18 | - | 1.3 | 55 |
| AN10 | 17.8 | 0.21 | - | 1.3 | 46 |
| AN11 | 24.8 | 0.17 | - | 1.9 | 49 |
| AN12 | 17.2 | 0.23 | - | 0.9 | 44 |
| AN13 | 18.4 | 0.22 | - | 1.5 | 44 |
| AN14 | 22.7 | 0.21 | - | 1.7 | 46 |
| AN15 | 16.3 | 0.22 | - | 1.1 | 45 |
| AN16 | 23.2 | 0.18 | 7.2 | 1.1 | 45 |
| AD1 | -15.3 | 0.37 | - | - | 42 |
| AD2 | -19.5 | 0.28 | - | - | 53 |
| AD3 | -21.3 | 0.32 | - | - | 52 |

(continued)

| | Surface Zeta potential (mV) | Average pore size (nm) | Content of nitrogen atoms[a] (at.%) | Content of phosphorus atoms[b] (at.%) | Contact angle (°) |
|---|---|---|---|---|---|
| AD4 | 9.5 | 0.15 | 2.7 | - | 55.7 |
| Notes: [a] refers to the content of nitrogen atoms in the quaternary ammonium salt groups;<br>[b] refers to the content of phosphorus atoms in the positively charged acid- and alkali-resistant composite nanofiltration membrane;<br>"-" indicates undetectable. | | | | | |

Table 3

| No. | Desalination rate for $MgCl_2$ (%) | Desalination rate for LiCl (%) | Magnesium-lithium separation coefficient S | Water flux (LMH) | After treatment with 5 wt% HCl for 7 days | |
|---|---|---|---|---|---|---|
| | | | | | Magnesium-lithium separation coefficient S | Water flux (LMH) |
| AN1 | 99.2 | 46.8 | 84.3 | 32.5 | 84.1 | 33.3 |
| AN2 | 99.4 | 53.8 | 64.2 | 26.2 | 64.2 | 26.9 |
| AN3 | 98.9 | 42.3 | 63.7 | 33.3 | 63.5 | 34.2 |
| AN4 | 98.5 | 41.9 | 61.8 | 34.2 | 61.4 | 34.7 |
| AN5 | 99.1 | 41.5 | 72.5 | 31.2 | 70.9 | 31.2 |
| AN6 | 98.5 | 38.4 | 70.6 | 32.7 | 69.8 | 33.8 |
| AN7 | 98.1 | 37.9 | 65.4 | 33.5 | 64.7 | 35.1 |
| AN8 | 98.5 | 38.2 | 74.3 | 24.3 | 73.9 | 24.7 |
| AN9 | 98.3 | 33.5 | 69.2 | 23.2 | 68.5 | 24.1 |
| AN10 | 98.9 | 40.2 | 65.3 | 33.4 | 64.3 | 34.2 |
| AN11 | 99.3 | 49.4 | 85.6 | 30.2 | 85.3 | 31.6 |
| AN12 | 97.2 | 36.3 | 42.4 | 36.5 | 43.2 | 37.4 |
| AN13 | 98.7 | 40.5 | 55.8 | 34.2 | 55.4 | 34.5 |
| AN14 | 99.1 | 43.2 | 79.5 | 32.3 | 78.3 | 34.5 |
| AN15 | 97.3 | 37.5 | 44.4 | 35.8 | 43.5 | 36.4 |
| AN16 | 99.1 | 42.4 | 70.3 | 31.7 | 70.2 | 32.3 |
| AD1 | 90.5 | 31.6 | 10.7 | 35.2 | 10.5 | 36.3 |
| AD2 | 88.2 | 25.7 | 6.4 | 26.3 | 6.2 | 27.2 |
| AD3 | 85.6 | 20.5 | 5.9 | 28.5 | 5.7 | 28.9 |
| AD4 | 95.2 | 56.4 | 8.7 | 15.1 | | |
| AD5 | 98.8 | 81.5 | | 16.3 | | |
| | | | | | | |
| No. | Desalination rate for $MgCl_2$ (%) | Desalination rate for LiCl (%) | Magnesium-lithium separation coefficient S | Water flux (LMH) | After treatment with 10 wt% NaOH for 30 days | |
| | | | | | Magnesium-lithium separation coefficient S | Water flux (LMH) |
| AN1 | 99.2 | 46.8 | 84.3 | 32.5 | 82.1 | 35.8 |
| AN8 | 98.5 | 38.2 | 74.3 | 24.3 | 71.5 | 26.1 |

It can be seen from Tables 1-3 that the positively charged acid- and alkali-resistant composite nanofiltration

membranes of the present invention can better achieve both excellent magnesium-lithium separation coefficient and high water flux.

As can be seen from Table 2, compared with the comparative examples, in the positively charged acid- and alkali-resistant composite nanofiltration membranes prepared in the examples, the halogenated quaternary ammonium salt and/or phosphonium salt react with the polyamine under the action of an alkaline catalyst, thereby grafting the positively charged quaternary ammonium salt groups and/or phosphonium salt groups onto the polyamine molecules, and after interfacial polymerization, the surface potential of the resulting positively charged acid- and alkali-resistant composite nanofiltration membrane is significantly improved.

On the other hand, the introduction of quaternary ammonium salt groups or phosphonium salt groups exerts a regulatory effect on interfacial polymerization, making the polymerization reaction proceed more fully. This results in a denser separation layer and smaller pore size of the finally prepared positively charged acid- and alkali-resistant composite nanofiltration membrane, which consequently exhibits higher magnesium-lithium separation coefficient while maintaining high water flux.

Furthermore, the data obtained after treatment with 5 wt% HCl for 7 days/10 wt% NaOH for 30 days indicate that the magnesium-lithium separation coefficient and water flux of the membrane remain basically unchanged after strong acid/strong alkali treatment. This demonstrates that the positively charged acid- and alkali-resistant composite nanofiltration membrane prepared from the positively charged modified polyamine has better acid- and alkali-resistance.

Comparative Example A5 shows a high retention rate for $MgCl_2$, but also has a relatively high retention rate for LiCl, which is extremely unfavorable for magnesium-lithium separation, since both the substances are retained by the membrane, making it impossible to achieve the separation effect. In addition, Comparative Example A5 has a low water flux, implying that the membrane is too dense, resulting in slow water production rate and low working efficiency.

Example B1

The upper surface of a polysulfone support layer with an area of 400 $cm^2$ was brought into contact with 50 g of an aqueous solution containing 0.5 wt% polyethyleneimine, and the solution was drained after 60 s of contact at 25°C; then, the upper surface of the support layer was brought into contact with 30 g of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain composite membrane A1.

At 30°C, the above composite membrane A1 was immersed in an aqueous solution containing 150 g of 10 wt% 3-bromopropyltriphenylphosphonium bromide and 0.5 wt% potassium hydroxide. After 1 min, the membrane was taken out and dried at 70°C for 5 min to obtain the quaternary phosphonium salt-modified positively charged acid- and alkali-resistant composite nanofiltration membrane BN1.

The XPS spectrum of phosphorus atoms of the positively charged acid- and alkali-resistant composite nanofiltration membrane BN1 is shown in Figure 2. As can be seen from Figure 2, the signal of phosphorus element on the membrane surface is obvious (presenting as a prominent single peak in the figure). This indicates that the quaternary phosphonium salt groups represented by Formula I are successfully grafted onto the acid- and alkali-resistant separation layer via N atoms, thereby enhancing the positive charge property of the surface of the positively charged acid- and alkali-resistant composite nanofiltration membrane, and improving the retention effect of the membrane on divalent and higher valent heavy metal ions.

Example B2

The upper surface of a polysulfone support layer with an area of 400 $cm^2$ was brought into contact with 50 g of an aqueous solution containing 0.5 wt% polyethylene polyamine, and the solution was drained after 60 s of contact at 25°C; then, the upper surface of the support layer was brought into contact with 30 g of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain composite membrane A2.

At 30°C, the above composite membrane A2 was immersed in an aqueous solution containing 150 g of 5 wt% 3-bromopropyltriphenylphosphonium bromide and 0.5 wt% potassium hydroxide. After 1 min, the membrane was taken out and dried at 70°C for 5 min to obtain the quaternary phosphonium salt-modified positively charged acid- and alkali-resistant composite nanofiltration membrane BN2.

Example B3

The preparation was carried out in accordance with the method of Example B1, except that "chloromethyltriphenylphosphonium chloride" was used instead of "3-bromopropyltriphenylphosphonium bromide", to obtain the quaternary phosphonium salt-modified positively charged acid- and alkali-resistant composite nanofiltration membrane

BN3.

Example B4

The preparation was carried out in accordance with the method of Example B1, except that "2-chloroethyltrimethylammonium chloride" was used instead of "3-bromopropyltriphenylphosphonium bromide", to obtain the quaternary ammonium salt-modified positively charged acid- and alkali-resistant composite nanofiltration membrane BN4.

Example B5

The preparation was carried out in accordance with the method of Example B1, except that "3-bromopropyltrimethylammonium bromide" was used instead of "3-bromopropyltriphenylphosphonium bromide", to obtain the quaternary ammonium salt-modified positively charged acid- and alkali-resistant composite nanofiltration membrane BN5.

Example B6

The preparation was carried out in accordance with the method of Example B1, except that "an aqueous solution containing 2 wt% polyethyleneimine" was used instead of "an aqueous solution containing 0.5 wt% polyethyleneimine", and "an Isopar E solution containing 0.05 wt% cyanuric chloride" was used instead of "an Isopar E solution containing 0.1 wt% 1,4-phenylene diisocyanate", to obtain the quaternary phosphonium salt-modified positively charged acid- and alkali-resistant composite nanofiltration membrane BN6.

Example B7

The preparation was carried out in accordance with the method of Example B1, except that "an aqueous solution containing 2 wt% polyethyleneimine" was used instead of "an aqueous solution containing 0.5 wt% polyethyleneimine", and "an Isopar E solution containing 0.2 wt% 1,3-benzenedisulfonyl chloride" was used instead of "an Isopar E solution containing 0.1 wt% 1,4-phenylene diisocyanate", to obtain the quaternary phosphonium salt-modified positively charged acid- and alkali-resistant composite nanofiltration membrane BN7.

Example B8

The preparation was carried out in accordance with the method of Example B1, except that "20 wt% 3-bromopropyltriphenylphosphonium bromide" was used instead of "10 wt% 3-bromopropyltriphenylphosphonium bromide", to obtain the quaternary phosphonium salt-modified positively charged acid- and alkali-resistant composite nanofiltration membrane BN8.

Example B9

The preparation was carried out in accordance with the method of Example B1, except that "0.1 wt% 3-bromopropyltriphenylphosphonium bromide" was used instead of "10 wt% 3-bromopropyltriphenylphosphonium bromide", to obtain the quaternary phosphonium salt-modified positively charged acid- and alkali-resistant composite nanofiltration membrane BN9.

Example B10

The preparation was carried out in accordance with the method of Example B1, except that "0.01 wt% potassium hydroxide" was used instead of "0.5 wt% potassium hydroxide", to obtain the quaternary phosphonium salt-modified positively charged acid- and alkali-resistant composite nanofiltration membrane BN10.

Example B11

The preparation was carried out in accordance with the method of Example B1, except that "0.005 wt% potassium hydroxide" was used instead of "0.5 wt% potassium hydroxide", to obtain the quaternary phosphonium salt-modified positively charged acid- and alkali-resistant composite nanofiltration membrane BN11.

Example B12

The preparation was carried out in accordance with the method of Example B1, except that the contact time was 10 s, to obtain the quaternary phosphonium salt-modified positively charged acid- and alkali-resistant composite nanofiltration membrane BN12.

Example B13

The preparation was carried out in accordance with the method of Example B1, except that the contact temperature was 20 °C, to obtain the quaternary phosphonium salt-modified positively charged acid- and alkali-resistant composite nanofiltration membrane BN13.

Comparative Example B1

The upper surface of a polysulfone support layer was brought into contact with 50 g of an aqueous solution containing 0.5 wt% polyethyleneimine, and the solution was drained after 60 s of contact at 25°C; then, the upper surface of the support layer was brought into contact with 30 g of an Isopar E solution containing 0.1 wt% of 1,4-phenylene diisocyanate, and the solution was drained after 60 s of contact at 25°C; subsequently, the membrane was placed in an oven and heated at 70°C for 3 min to obtain composite membrane BD1.

Comparative Example B2

The preparation was carried out in accordance with the method of Example B1, except that no catalyst was added, to obtain composite membrane BD2.

The positively charged acid- and alkali-resistant composite nanofiltration membranes prepared in the examples and the composite membranes prepared in the comparative examples were tested for their thickness, surface Zeta potential, contact angle and average pore size, with the results shown in Tables 4 and 5.

Table 4

| | Thickness of the bottom layer (μm) | Thickness of the porous support layer (μm) | Thickness of the acid- and alkali-resistant separation layer (nm) |
|---|---|---|---|
| BN1 | 75 | 40 | 139 |
| BN2 | 75 | 40 | 134 |
| BN3 | 75 | 40 | 140 |
| BN4 | 75 | 40 | 138 |
| BN5 | 75 | 40 | 136 |
| BN6 | 75 | 40 | 157 |
| BN7 | 75 | 40 | 179 |
| BN8 | 75 | 40 | 154 |
| BN9 | 75 | 40 | 135 |
| BN10 | 75 | 40 | 138 |
| BN11 | 75 | 40 | 134 |
| BN12 | 75 | 40 | 135 |
| BN13 | 75 | 40 | 137 |
| BD1 | 75 | 40 | 132 |
| BD2 | 75 | 40 | 133 |
| Notes: The thickness of the acid- and alkali-resistant separation layer mentioned herein refers to that of the acid- and alkali-resistant separation layer modified with quaternary ammonium salt and/or halogenated quaternary phosphonium salt. | | | |

Table 5

| No. | Surface Zeta potential (mV) | Average pore size (nm) | Content of nitrogen atoms[a] (at.%) | Content of phosphorus atoms[b] (at.%) | Contact angle (°) |
|---|---|---|---|---|---|
| BN1 | 17.9 | 0.19 | - | 1.8 | 60.3 |
| BN2 | 16.7 | 0.17 | - | 1.7 | 64.7 |
| BN3 | 16.2 | 0.19 | - | 1.4 | 59.6 |
| BN4 | 10.4 | 0.21 | 4.1 | - | 52.3 |
| BN5 | 9.8 | 0.2 | 3.9 | - | 53.5 |
| BN6 | 15.6 | 0.23 | - | 1.7 | 65.3 |
| BN7 | 14.7 | 0.25 | - | 1.8 | 52.4 |
| BN8 | 18.2 | 0.17 | - | 1.9 | 62.4 |
| BN9 | 9.4 | 0.2 | - | 0.7 | 60.2 |
| BN10 | 12.3 | 0.21 | - | 1.1 | 61.4 |
| BN11 | 2.4 | 0.2 | - | 0.6 | 58.8 |
| BN12 | 5.6 | 0.21 | - | 0.7 | 60.3 |
| BN13 | 6.4 | 0.2 | - | 0.6 | 61.8 |
| BD1 | -11.4 | 0.21 | - | - | 58.7 |
| BD2 | -9.8 | 0.21 | - | 0.4 | 58.8 |

Notes: [a] refers to the content of nitrogen atoms in the quaternary ammonium salt groups in the positively charged acid- and alkali-resistant composite nanofiltration membrane;
[b] refers to the content of phosphorus atoms in the positively charged acid- and alkali-resistant composite nanofiltration membrane;
"-" indicates undetectable.

The positively charged acid- and alkali-resistant composite nanofiltration membranes prepared in the examples and the composite membranes prepared in the comparative examples were tested for their retention rates for $NiCl_2$ and $CuCl_2$ as well as water flux, respectively. After the positively charged acid- and alkali-resistant composite nanofiltration membranes prepared in the examples and the composite membranes prepared in the comparative examples were subjected to acid treatment, their retention rates for $NiCl_2$ and $CuCl_2$ as well as water flux were tested again, respectively. The results are shown in Table 6.

Table 6

| No. | Retention rate for $NiCl_2$ (%) | Retention rate for $CuCl_2$ (%) | Water flux (LMH) | After treatment with 5 wt% HCl for 7 days | | |
|---|---|---|---|---|---|---|
| | | | | Retentio n rate for $NiCl_2$ (%) | Retentio n rate for $CuCl_2$ (%) | Water flux (LMH) |
| BN1 | 97.2 | 96.7 | 33.6 | 97.2 | 96.4 | 34.2 |
| BN2 | 99.3 | 98.4 | 26.3 | 98.9 | 98.2 | 26.5 |
| BN3 | 96.9 | 95.8 | 33.9 | 96.2 | 95.7 | 35.2 |
| BN4 | 96.1 | 95.6 | 34.6 | 95.9 | 94.9 | 34.7 |
| BN5 | 95.7 | 94.9 | 34.9 | 95.7 | 94.5 | 35.1 |
| BN6 | 95.6 | 94.8 | 24.9 | 95.5 | 94.7 | 25.1 |
| BN7 | 94.1 | 93.9 | 25.3 | 93.9 | 93.5 | 25.4 |
| BN8 | 98.5 | 98.3 | 27.4 | 98.4 | 98.1 | 27.8 |
| BN9 | 90.3 | 89.5 | 34.9 | 89.8 | 89.4 | 36.4 |

(continued)

| No. | Retention rate for $NiCl_2$ (%) | Retention rate for $CuCl_2$ (%) | Water flux (LMH) | After treatment with 5 wt% HCl for 7 days | | |
|---|---|---|---|---|---|---|
| | | | | Retentio n rate for $NiCl_2$ (%) | Retentio n rate for $CuCl_2$ (%) | Water flux (LMH) |
| BN10 | 91.3 | 90.5 | 33.8 | 91.2 | 89.8 | 34.5 |
| BN11 | 90.2 | 88.7 | 34.2 | 90.1 | 88.6 | 35.2 |
| BN12 | 89.8 | 88.4 | 34.5 | 89.6 | 88.2 | 34.7 |
| BN13 | 89.6 | 88.2 | 34.4 | 89.4 | 88.1 | 34.7 |
| BD1 | 87.3 | 84.2 | 35.2 | 87.2 | 83.9 | 35.4 |
| BD2 | 89.4 | 87.5 | 34.7 | 89.3 | 87.4 | 34.9 |
| AD4 | 93.5 | 92.7 | 15.4 | | | |
| | | | | | | |
| No. | Retention rate for $NiCl_2$ (%) | Retention rate for $CuCl_2$ (%) | Water flux (LMH) | After treatment with 10 wt% NaOH for 30 days | | |
| | | | | Retentio n rate for $NiCl_2$ (%) | Retentio n rate for $CuCl_2$ (%) | Water flux (LMH) |
| BN1 | 97.2 | 96.7 | 33.6 | 96.9 | 96.5 | 35.2 |
| BN6 | 95.6 | 94.8 | 24.9 | 95.5 | 93.1 | 26.7 |

It can be seen from Examples B1-B7 that the positively charged acid- and alkali-resistant composite nanofiltration membranes prepared by the method of the present invention exhibit good acid- and alkali-resistance, while having excellent retention effect on divalent and higher valent heavy metal ions and high water flux.

As can be seen from Examples B1, B8 and B9, the sufficient grafting of halogenated quaternary phosphonium salt on the membrane surface increases the surface charge density of the positively charged acid- and alkali-resistant composite nanofiltration membranes, thereby enhancing the retention rate of the nanofiltration membranes for divalent and higher valent metal ions while retaining high water flux. When the concentration of halogenated quaternary phosphonium salt is too low, the retention rate decreases; when the concentration of halogenated quaternary phosphonium salt is too high, it will lead to a reduction in water flux and a waste of raw materials.

It can be seen from Examples B1, B10 and B11 that an appropriate catalyst concentration in the present invention can promote the full progress of the reaction for grafting halogenated quaternary ammonium salt and/or halogenated quaternary phosphonium salt on the membrane surface, thereby improving the retention rate of the nanofiltration membranes for divalent and higher valent metal ions while retaining high water flux.

Regarding Comparative Example B1 wherein no modification was conducted with halogenated quaternary ammonium salt and/or halogenated quaternary phosphonium salt, the resulting nanofiltration membrane has a reduced retention rate for divalent and higher valent metal ions, failing to achieve effective retention of such ions.

Regarding Comparative Example B2 wherein no catalyst was added, as can be seen from the data in Table 4, the resulting composite membrane has a lower surface Zeta potential and lower content of phosphorus atoms, which proves that the grafting on the acid- and alkali-resistant separation layer is insufficient. The data in Table 5 also shows that the composite membrane has a reduced retention rate for $NiCl_2$ and $CuCl_2$.

After treatment with 5 wt% HCl for 7 days/10 wt% NaOH for 30 days, the retention rates of the positively charged acid- and alkali-resistant composite nanofiltration membranes for $NiCl_2$ and $CuCl_2$ and the water flux of the membranes show no significant changes, indicating that the positively charged acid- and alkali-resistant composite nanofiltration membranes have good acid- and alkali-resistance.

Example C1

(1) At 25°C, the upper surface of the aforementioned polysulfone support layer with an area of 400 $cm^2$ was brought into a first contact with 50 mL of an aqueous solution containing 0.5 wt% polyethyleneimine, and the solution was drained after 60 s of contact; then the upper surface of the support layer after the first contact was brought into a second contact with 30 mL of an Isopar E solution containing 0.1 wt% of 1,4-phenylene diisocyanate, and the solution was

drained after 60 s of contact; finally the membrane after the two contacts was placed in an oven and heated at 70°C for 3 min to obtain composite nanofiltration membrane A1.

(2) At 25°C, the obtained composite nanofiltration membrane A1 was immersed in 200 mL of a methanol solution containing 10 wt% bromoethane and 0.5 wt% potassium hydroxide (the weight ratio of bromoethane to potassium hydroxide was 20:1) for a third contact, taken out after 5 min, and dried at 70°C for 5 min to obtain the positively charged acid- and alkali-resistant composite nanofiltration membrane CN1.

It can be seen from the XPS spectrum of surface nitrogen atoms of the positively charged acid- and alkali-resistant composite nanofiltration membrane in Figure 3 that a new signal peak appears at 402.4 eV, corresponding to the signal of nitrogen atoms in the quaternary ammonium salt, which proves that bromoethane reacts with tertiary amine in the acid- and alkali-resistant separation layer to form a quaternary ammonium salt structure.

Example C2

(1) At 25°C, the upper surface of the aforementioned polysulfone support layer with an area of 400 $cm^2$ was brought into a first contact with 50 mL of an aqueous solution containing 0.5 wt% polyethylene polyamine, and the solution was drained after 60 s of contact; then the upper surface of the support layer after the first contact was brought into a second contact with 30 mL of an Isopar E solution containing 0.1 wt% of 1,4-phenylene diisocyanate, and the solution was drained after 60 s of contact; finally the membrane after the two contacts was placed in an oven and heated at 70°C for 3 min to obtain composite nanofiltration membrane A2.

(2) At 25°C, the obtained composite nanofiltration membrane A2 was immersed in 200 mL of a methanol solution containing 5 wt% chloropropane and 0.5 wt% potassium hydroxide (the weight ratio of chloropropane to potassium hydroxide was 10:1) for a third contact, taken out after 5 min, and dried at 70°C for 5 min to obtain the positively charged acid- and alkali-resistant composite nanofiltration membrane CN2.

Example C3

(1) At 25°C, the upper surface of the aforementioned polysulfone support layer with an area of 400 $cm^2$ was brought into a first contact with 50 mL of an aqueous solution containing 0.5 wt% 1,4-diaminopiperazine, and the solution was drained after 60 s of contact; then the upper surface of the support layer after the first contact was brought into a second contact with 30 mL of an Isopar E solution containing 0.1 wt% of 1,4-phenylene diisocyanate, and the solution was drained after 60 s of contact; finally the membrane after the two contacts was placed in an oven and heated at 70°C for 3 min to obtain composite nanofiltration membrane A3.

(2) At 25°C, the obtained composite nanofiltration membrane A3 was immersed in 80 mL of a methanol solution containing 10 wt% iodomethane and 0.5 wt% potassium hydroxide (the weight ratio of iodomethane to potassium hydroxide was 20:1) for a third contact, taken out after 5 min, and dried at 70°C for 5 min to obtain the positively charged acid- and alkali-resistant composite nanofiltration membrane CN3.

Example C4

The preparation method was the same as that of Example C1, except that in step (2), "200 mL of a solution containing 10 wt% bromohexane" was used instead of "200 mL of a solution containing 10 wt% bromoethane" (the weight ratio of bromohexane to potassium hydroxide was 20:1), to obtain the positively charged acid- and alkali-resistant composite nanofiltration membrane CN4.

Example C5

The preparation method was the same as that of Example C1, except that in step (2), "200 mL of a solution containing 10 wt% iodohexane" was used instead of "200 mL of a solution containing 10 wt% bromoethane" (the weight ratio of iodohexane to potassium hydroxide was 20:1), to obtain the positively charged acid- and alkali-resistant composite nanofiltration membrane CN5.

Example C6

(1) At 25°C, the upper surface of the aforementioned polysulfone support layer with an area of 400 $cm^2$ was brought into a first contact with 50 mL of an aqueous solution containing 2 wt% polyethyleneimine, and the solution was drained after 60 s of contact; then the upper surface of the support layer after the first contact was brought into a second contact with 30 mL of an Isopar E solution containing 0.05 wt% cyanuric chloride, and the solution was drained after 60 s of contact; finally the membrane after the two contacts was placed in an oven and heated at 70°C for 3 min to obtain composite nanofiltration membrane A6.

(2) At 25°C, the obtained composite nanofiltration membrane A6 was immersed in 200 mL of a methanol solution containing 10 wt% bromoethane and 0.5 wt% potassium hydroxide (the weight ratio of bromoethane to potassium hydroxide was 20:1) for a third contact, taken out after 5 min, and dried at 70°C for 5 min to obtain the positively charged acid- and alkali-resistant composite nanofiltration membrane CN6.

Example C7

(1) At 25°C, the upper surface of the aforementioned polysulfone support layer with an area of 400 $cm^2$ was brought into a first contact with 50 mL of an aqueous solution containing 2 wt% polyethyleneimine, and the solution was drained after 60 s of contact; then the upper surface of the support layer after the first contact was brought into a second contact with 30 mL of an Isopar E solution containing 0.2 wt% 1,3-benzenedisulfonyl chloride, and the solution was drained after 60 s of contact; finally the membrane after the two contacts was placed in an oven and heated at 70°C for 3 min to obtain composite nanofiltration membrane A7.

(2) At 25°C, the obtained composite nanofiltration membrane A7 was immersed in 200 mL of a methanol solution containing 10 wt% bromoethane and 0.5 wt% potassium hydroxide (the weight ratio of bromoethane to potassium hydroxide was 20:1) for a third contact, taken out after 5 min, and dried at 70°C for 5 min to obtain the positively charged acid- and alkali-resistant composite nanofiltration membrane CN7.

Example C8

The preparation method was the same as that of Example C1, except that in step (2), "200 mL of a mixed solution containing 5 wt% bromoethane and 5 wt% 1,3-dibromopropane" was used instead of "200 mL of a solution containing 10 wt% bromoethane" (the ratio of the total weight of bromoethane and 1,3-dibromopropane to the weight of potassium hydroxide was 20:1), to obtain the positively charged acid- and alkali-resistant composite nanofiltration membrane CN8.

Example C9

The preparation method was the same as that of Example C1, except that in step (2), "200 mL of a solution containing 15 wt% bromoethane" was used instead of "200 mL of a solution containing 10 wt% bromoethane", to obtain the positively charged acid- and alkali-resistant composite nanofiltration membrane CN9.

Example C10

The preparation method was the same as that of Example C1, except that in step (2), "200 mL of a solution containing 25 wt% bromoethane" was used instead of "200 mL of a solution containing 10 wt% bromoethane", to obtain the positively charged acid- and alkali-resistant composite nanofiltration membrane CN10.

Example C11

The preparation method was the same as that of Example C1, except that in step (2), "taken out after 0.5 min" was used instead of "taken out after 5 min", to obtain the positively charged acid- and alkali-resistant composite nanofiltration membrane CN11.

Example C12

The preparation method was the same as that of Example C1, except that in step (2), "200 mL of a solution

containing 0.01 wt% potassium hydroxide" was used instead of "200 mL of a solution containing 0.5 wt% potassium hydroxide", to obtain the positively charged acid- and alkali-resistant composite nanofiltration membrane CN12.

Example C13

The preparation method was the same as that of Example C1, except that in step (2), "200 mL of a solution containing 0.005 wt% potassium hydroxide" was used instead of "200 mL of a solution containing 0.5 wt% potassium hydroxide", to obtain the positively charged acid- and alkali-resistant composite nanofiltration membrane CN13.

Example C14

The preparation method was the same as that of Example C1, except that in step (1), "50 mL of an aqueous solution containing 0.5 wt% 1,4-cyclohexanediamine" was used instead of "50 mL of an aqueous solution containing 0.5 wt% polyethyleneimine", to obtain the positively charged acid- and alkali-resistant composite nanofiltration membrane CN14.

Example C15

The preparation method was the same as that of Example C1, except that in step (2), "200 mL of a solution containing 10 wt% tetradecyl bromide" was used instead of "200 mL of a solution containing 10 wt% bromoethane", to obtain the positively charged acid- and alkali-resistant composite nanofiltration membrane CN15.

Comparative Example C1

At 25°C, the upper surface of the aforementioned polysulfone support layer with an area of 400 $cm^2$ was brought into a first contact with 50 mL of an aqueous solution containing 0.5 wt% polyethyleneimine, and the solution was drained after 60 s of contact; then the upper surface of the support layer after the first contact was brought into a second contact with 30 mL of an Isopar E solution containing 0.1 wt% of 1,4-phenylene diisocyanate, and the solution was drained after 60 s of contact; finally the membrane after the two contacts was placed in an oven and heated at 70°C for 3 min to obtain composite membrane CD1.

Comparative Example C2

At 25°C, the upper surface of the aforementioned polysulfone support layer with an area of 400 $cm^2$ was brought into a first contact with 50 mL of an aqueous solution containing 0.5 wt% polyethylene polyamine, and the solution was drained after 60 s of contact; then the upper surface of the support layer after the first contact was brought into a second contact with 30 mL of an Isopar E solution containing 0.1 wt% of 1,4-phenylene diisocyanate, and the solution was drained after 60 s of contact; finally the membrane after the two contacts was placed in an oven and heated at 70°C for 3 min to obtain composite membrane CD2.

Comparative Example C3

At 25°C, the upper surface of the aforementioned polysulfone support layer with an area of 400 $cm^2$ was brought into a first contact with 50 mL of an aqueous solution containing 2 wt% polyethyleneimine, and the solution was drained after 60 s of contact; then the upper surface of the support layer after the first contact was brought into a second contact with 30 mL of an Isopar E solution containing 0.05 wt% cyanuric chloride, and the solution was drained after 60 s of contact; finally the membrane after the two contacts was placed in an oven and heated at 70°C for 3 min to obtain composite membrane CD3.

Comparative Example C4

At 25°C, the upper surface of the aforementioned polysulfone support layer with an area of 400 $cm^2$ was brought into a first contact with 50 mL of an aqueous solution containing 2 wt% polyethyleneimine, and the solution was drained after 60 s of contact at 25°C; then the upper surface of the support layer after the first contact was brought into a second contact with 30 mL of an Isopar E solution containing 0.2 wt% 1,3-benzenedisulfonyl chloride, and the solution was drained after 60 s of contact; finally the membrane after the two contacts was placed in an oven and heated at 70°C for 3 min to obtain composite membrane CD4.

The thickness of each layer, surface Zeta potential, average pore size, content of nitrogen atoms in the

quaternary ammonium salt structure of the acid- and alkali-resistant separation layer, and contact angle of the positively charged acid- and alkali-resistant composite nanofiltration membranes of the examples and the composite membranes of the comparative examples are shown in Table 7.

Table 7

| No. | Bottom layer (μm) | Porous support layer (μm) | Separati on layer (nm) | Surface Zeta potentia l (mV) | Average pore size (nm) | a $N^+$ (at.%) | Contact angle (°) |
|---|---|---|---|---|---|---|---|
| CN1 | 75 | 40 | 138 | 16.3 | 0.22 | 2.17 | 35 |
| CN2 | 75 | 40 | 145 | 15.4 | 0.17 | 1.78 | 46 |
| CN3 | 75 | 40 | 127 | 10.8 | 0.28 | 1.56 | 37 |
| CN4 | 75 | 40 | 132 | 12.3 | 0.26 | 1.72 | 34 |
| CN5 | 75 | 40 | 129 | 13.5 | 0.25 | 1.35 | 38 |
| CN6 | 75 | 40 | 151 | 15.9 | 0.22 | 1.89 | 49 |
| CN7 | 75 | 40 | 145 | 14.2 | 0.28 | 1.65 | 44 |
| CN8 | 75 | 40 | 143 | 19.4 | 0.23 | 2.33 | 33 |
| CN9 | 75 | 40 | 164 | 17.2 | 0.16 | 3.7 | 34 |
| CN10 | 75 | 40 | 178 | 17.5 | 0.15 | 3.9 | 33 |
| CN11 | 75 | 40 | 128 | 7.6 | 0.31 | 1.7 | 39 |
| CN12 | 75 | 40 | 128 | 10.2 | 0.29 | 1.8 | 37 |
| CN13 | 75 | 40 | 126 | 4.3 | 0.32 | 1.4 | 39 |
| CN14 | 75 | 40 | 127 | -14.5 | 0.31 | 0 | 55 |
| CN15 | 75 | 40 | 126 | -10.7 | 0.34 | 0.24 | 41 |
| CD1 | 75 | 40 | 127 | -15.3 | 0.37 | 0 | 42 |
| CD2 | 75 | 40 | 135 | -17.8 | 0.26 | 0 | 49 |
| CD3 | 75 | 40 | 125 | -19.5 | 0.28 | 0 | 53 |
| CD4 | 75 | 40 | 132 | -21.3 | 0.32 | 0 | 52 |

The separation layer refers to the acid- and alkali-resistant separation layer;
[a] refers to the content of nitrogen atoms in the quaternary ammonium salt structure of the acid- and alkali-resistant separation layer.

The positively charged acid- and alkali-resistant composite nanofiltration membranes of the examples and the composite membranes of the comparative examples were mounted in a membrane cell, pre-pressurized at 1.5 MPa for 1 h, and then tested for their water flux and retention rate for $Fe^{2+}$ under the conditions of a pressure of 2 MPa and a temperature of 25°C. Moreover, the positively charged acid- and alkali-resistant composite nanofiltration membranes of the examples and the composite membranes of the comparative examples were immersed in a 5 wt% HCl solution for 7 days, pre-pressurized at 1.5 MPa for 1 h, and then tested for their water flux and retention rate for $Fe^{2+}$ under the conditions of a pressure of 2 MPa and a temperature of 25°C. The results are shown in Table 8.

Table 8

| No. | Retention rate for $Fe^{2+}$ (%) | Permeatio n rate for $H^+$ (%) | Water flux (LMH) | After treatment with 5 wt% HCl for 7 days | | |
|---|---|---|---|---|---|---|
| | | | | Retention rate for $Fe^{2+}$ (%) | Permeatio n rate for $H^+$ (%) | Water flux (LMH) |
| CN1 | 97.5 | 90.5 | 32.1 | 97.3 | 90.8 | 33.5 |
| CN2 | 98.2 | 84.9 | 26.6 | 98.1 | 85.4 | 26.7 |
| CN3 | 96.3 | 91.2 | 32.5 | 96.3 | 91.7 | 33.9 |

(continued)

| No. | Retention rate for $Fe^{2+}$ (%) | Permeation rate for $H^+$ (%) | Water flux (LMH) | After treatment with 5 wt% HCl for 7 days | | |
|---|---|---|---|---|---|---|
| | | | | Retention rate for $Fe^{2+}$ (%) | Permeatio n rate for $H^+$ (%) | Water flux (LMH) |
| CN4 | 96.5 | 90.3 | 32.3 | 95.7 | 90.9 | 32.9 |
| CN5 | 95.4 | 91.2 | 33.7 | 94.8 | 91.5 | 34.5 |
| CN6 | 97.2 | 91.5 | 22.5 | 96.8 | 91.7 | 24.8 |
| CN7 | 95.2 | 92.7 | 24.6 | 95.1 | 93.5 | 25.4 |
| CN8 | 97.8 | 90.1 | 31.3 | 97.7 | 91.2 | 31.9 |
| CN9 | 97.6 | 89.9 | 28.4 | 97.5 | 90.3 | 28.5 |
| CN10 | 97.7 | 88.7 | 25.9 | 97.6 | 89.5 | 25.9 |
| CN11 | 90.3 | 90.9 | 33.5 | 89.9 | 91.4 | 33.7 |
| CN12 | 95.2 | 89.7 | 33.4 | 94.8 | 90.3 | 33.5 |
| CN13 | 90.3 | 91.2 | 34.3 | 90.2 | 91.8 | 34.7 |
| CN14 | 86.3 | 91.7 | 37.2 | 85.4 | 92.4 | 37.3 |
| CN15 | 90.4 | 88.3 | 34.7 | 89.8 | 89.4 | 33.2 |
| CD1 | 88.5 | 91.3 | 35.2 | 88.2 | 91.5 | 37.2 |
| CD2 | 90.7 | 85.7 | 28.6 | 88.9 | 86.2 | 30.3 |
| CD3 | 87.9 | 91.7 | 26.3 | 85.5 | 91.9 | 28.9 |
| CD4 | 82.3 | 93.5 | 28.5 | 82.2 | 93.7 | 29.5 |
| AD4 | 94.1 | 80.4 | 14.9 | | | |
| | | | | | | |
| No. | Retention rate for $Fe^{2+}$ (%) | Permeation rate for $H^+$ (%) | Water flux (LMH) | After treatment with 10 wt% NaOH for 30 days | | |
| | | | | Retention rate for $Fe^{2+}$ (%) | Permeatio n rate for $H^+$ (%) | Water flux (LMH) |
| CN1 | 97.5 | 90.5 | 32.1 | 97.2 | 91.5 | 34.2 |

As can be seen from Table 8, under the action of the alkaline catalyst, haloalkanes for the surface post-treatment of the composite nanofiltration membrane react with the tertiary amine groups in the structure of the acid- and alkali-resistant separation layer, converting them into positively charged quaternary ammonium salt groups. The enhanced positive charge property of the membrane surface increases the electrostatic repulsion with divalent $Fe^{2+}$, thereby significantly improving the retention rate the membrane for divalent $Fe^{2+}$.

A comparison of Example C6 and Example C7 shows that different types of polyfunctional polar monomers may affect the initial retention rate and initial water flux. Therefore, in the present invention, it is beneficial to conduct a longitudinal comparison of the positively charged acid- and alkali-resistant composite nanofiltration membranes prepared using the same polyfunctional polar monomer. Nevertheless, the performance of the positively charged acid- and alkali-resistant composite nanofiltration membranes of the examples prepared with polyfunctional polar monomers that meet requirements is superior to that of the comparative examples.

A comparison of Example C1, Example C9 and Example C10 shows that the amount of haloalkanes can affect the degree of reaction between haloalkanes and the residual tertiary amine groups on the acid- and alkali-resistant separation layer, and ultimately affect the content of nitrogen atoms in the quaternary ammonium salt structure. When the amount of haloalkanes is excessive, the retention rate remains basically constant with a small increase range, while the water flux decreases significantly.

A comparison of Example C1 and Example C11 shows that if the third contact time is too short, the reaction cannot proceed sufficiently, resulting in a decrease in both retention rate and water flux.

A comparison of Example C1, Example C12 and Example C13 shows that the amount of the catalyst can promote the full progress of the reaction between haloalkanes and the tertiary amine groups on the surface of the composite nanofiltration membrane, thereby improving the retention rate and water flux of the positively charged acid- and alkali-resistant composite nanofiltration membrane.

A comparison of Example C1, Comparative Example C1 and Comparative Example C2 shows that, without the addition of haloalkanes, the composite nanofiltration membrane cannot achieve excellent retention rate and water flux, nor does it have application value in acidic or alkaline environments.

After treatment with 5 wt% HCl for 7 days/10 wt% NaOH for 30 days, the retention rate of the positively charged acid- and alkali-resistant composite nanofiltration membrane for $Fe^{2+}$ and the water flux of the membrane show no significant changes, indicating that the positively charged acid- and alkali-resistant composite nanofiltration membrane has good acid- and alkali-resistance. Therefore, the positively charged composite membrane can realize the concentration of divalent and higher valent ions under acidic conditions as well as high $H^+$ permeability. The high $H^+$ permeability indicates that acid can pass through the positively charged acid- and alkali-resistant composite nanofiltration membrane, enabling the recovery and reuse of acid solutions.

Regarding Comparative Example A4 wherein the nanofiltration membrane was modified with epoxy quaternary ammonium salt, as can be seen from the data in Tables 1, 2, 3, 6 and 8, compared with the quaternary ammonium salts of the present invention, the nanofiltration membrane modified with epoxy quaternary ammonium salt has lower surface potential and significantly reduced membrane pore size. As a result, the nanofiltration membrane has low retention rate for divalent ions, poor permeability for monovalent ions and compromised water flux.

The preferred embodiments of the present invention have been described in detail above, but the present invention is not limited thereto. Within the scope of the technical concept of the present invention, various simple modifications can be made to the technical solution of the present invention, including combining the various technical features in any other appropriate manner. These simple modifications and combinations should also be regarded as the content disclosed by the present invention, and all fall within the protection scope of the present invention.

## Claims

1. A positively charged acid- and alkali-resistant composite nanofiltration membrane, which is **characterized in that**, the positively charged acid- and alkali-resistant composite nanofiltration membrane sequentially comprises a bottom layer, a porous intermediate layer, and an acid- and alkali-resistant separation layer;

wherein, the acid- and alkali-resistant separation layer comprises:

(1) a quaternary ammonium salt group represented by Formula I and/or a quaternary phosphonium salt group represented by Formula II, which are grafted onto the acid- and alkali-resistant separation layer via a N atom;

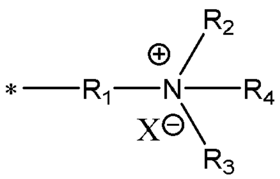
Formula I;
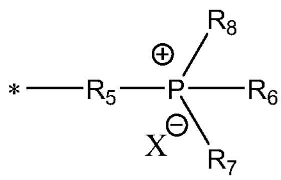
Formula II;

wherein, $R_1$ is a substituted or unsubstituted C1-C9 alkylene group or phenylene group; $R_2$, $R_3$, and $R_4$ are each independently selected from a C1-C3 alkyl group or phenyl group; $R_5$ is a C1-C6 alkylene group, phenylene group, or C7-C10 aralkylene group; $R_6$, $R_7$, and $R_8$ are each independently a phenyl group or C7-C10 aralkyl group; X is a halogen; or

(2) a quaternary ammonium salt structure, which comprises a structural formula represented by Formula III and/or a structural formula represented by Formula IV,

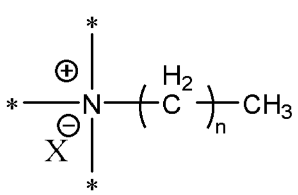
Formula III;
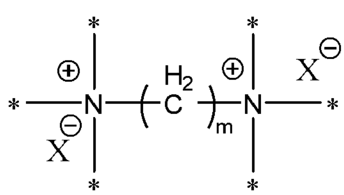
Formula IV;

X is a halogen; n is an integer ranging from 0 to 10; m is an integer ranging from 2 to 10;

wherein, the acid- and alkali-resistant separation layer is at least one selected from a polyurea separation layer, a polytriazine amine separation layer, a polysulfonamide separation layer, a poly(triazine amine-urea) separation layer, a poly(sulfonamide-urea) separation layer, a poly(triazine amine-sulfonamide) separation layer, and a poly(triazine amine-sulfonamide-urea) separation layer.

**2.** The positively charged acid- and alkali-resistant composite nanofiltration membrane as claimed in claim 1, wherein, with regard to (1),

$R_1$ is a substituted or unsubstituted C1-C9 alkylene group or phenylene group, the substituent being a carboxyl, nitro, amino, silyl, carbonyl, ether or ester group; preferably, $R_1$ is an unsubstituted C1-C9 alkylene group or phenylene group; preferably, $R_1$ is an unsubstituted C1-C6 alkylene group or phenylene group; preferably, $R_1$ is an unsubstituted C1-C3 alkylene group; and/or
$R_2$, $R_3$, $R_4$ are each independently selected from a C1-C3 alkyl group; preferably, $R_2$, $R_3$, $R_4$ are each independently $CH_3$; and/or
$R_5$ is a C1-C3 alkylene group, phenylene group, or C8-C10 aralkylene group; preferably, $R_5$ is a C1-C3 alkylene group or C8-C10 aralkylene group; and/or
$R_6$, $R_7$, $R_8$ are each independently a phenyl group or C8-C10 aralkyl group; preferably, $R_6$, $R_7$, $R_8$ are each independently a phenyl group; and/or
X is Cl, Br or I.

**3.** The positively charged acid- and alkali-resistant composite nanofiltration membrane as claimed in claim 1, wherein, with regard to (2),

X is Cl, Br or I; and/or
n is an integer ranging from 0 to 7; and/or
m is an integer ranging from 2 to 8.

**4.** The positively charged acid- and alkali-resistant composite nanofiltration membrane as claimed in any one of claims 1-3, wherein, the acid- and alkali-resistant separation layer is at least one selected from a polyurea separation layer, a polytriazine amine separation layer and a polysulfonamide separation layer.

**5.** The positively charged acid- and alkali-resistant composite nanofiltration membrane as claimed in any one of claims 1-4, wherein,

the content of nitrogen atoms in the quaternary ammonium salt group or quaternary ammonium salt structure of the positively charged acid- and alkali-resistant composite nanofiltration membrane is 0.5-20 at.%, preferably 2-15 at.%; and/or
the content of phosphorus atoms in the quaternary phosphonium salt group of the positively charged acid- and alkali-resistant composite nanofiltration membrane is 0.4-3 at.%, preferably 0.5-2 at.%.

**6.** The positively charged acid- and alkali-resistant composite nanofiltration membrane as claimed in any one of claims 1-5, wherein,

with regard to (1), the content of nitrogen atoms in the quaternary ammonium salt group of the positively charged acid- and alkali-resistant composite nanofiltration membrane is 10-20 at.%, or 10-15 at.%; or
with regard to (1), the content of nitrogen atoms in the quaternary ammonium salt group of the positively charged acid- and alkali-resistant composite nanofiltration membrane is 0.5-6 at.%, or 2-5 at.%; and/or
with regard to (2), the content of nitrogen atoms in the quaternary ammonium salt structure of the positively charged acid- and alkali-resistant composite nanofiltration membrane is 0.5-5 at.%, preferably 2-5 at.%.

**7.** The positively charged acid- and alkali-resistant composite nanofiltration membrane as claimed in any one of claims 1-6, wherein, the surface Zeta potential of the positively charged acid- and alkali-resistant composite nanofiltration membrane is 0-30 mV, preferably 5-25 mV, preferably 5-20 mV.

**8.** The positively charged acid- and alkali-resistant composite nanofiltration membrane as claimed in any one of claims 1-7, wherein, the average pore size of the positively charged acid- and alkali-resistant composite nanofiltration membrane is 0.1-0.5 nm, preferably 0.1-0.4 nm, preferably 0.15-0.3 nm, preferably 0.2-0.3 nm.

**9.** The positively charged acid- and alkali-resistant composite nanofiltration membrane as claimed in any one of claims 1-8, wherein, the contact angle of the positively charged acid- and alkali-resistant composite nanofiltration membrane is 20-80°, preferably 30-80°, preferably 30-60°.

**10.** The positively charged acid- and alkali-resistant composite nanofiltration membrane as claimed in any one of claims 1-9, wherein,

the thickness of the bottom layer is 30-150 μm, preferably 50-120 μm; and/or
the thickness of the porous support layer is 10-100 μm, preferably 30-60 μm; and/or
the thickness of the acid- and alkali-resistant separation layer is 10-500 nm, preferably 50-300 nm.

**11.** A method for preparing a positively charged acid- and alkali-resistant composite nanofiltration membrane, wherein the preparation method comprises the following steps:

S1. under stirring conditions, adding a first solution containing a halogenated quaternary ammonium salt and/or a halogenated quaternary phosphonium salt, and a catalyst to a second solution containing a polyamine, and carrying out a reaction to obtain a modified polyamine;
S2. preparing a porous support layer on a bottom layer;
S3. bringing the surface of the porous support layer into a first contact with an aqueous phase containing the modified polyamine obtained in Step S1, and then a second contact with an organic phase containing a polyfunctional polar monomer, and performing heat treatment to obtain the positively charged acid- and alkali-resistant composite nanofiltration membrane;
the halogenated quaternary ammonium salt has a structure represented by Formula 1; the halogenated quaternary phosphonium salt has a structure represented by Formula 2;

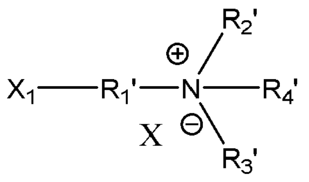 Formula 1; 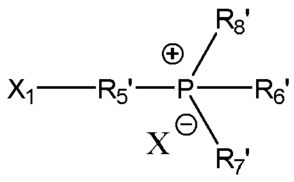 Formula 2;

wherein, $R_1$' is a substituted or unsubstituted C1-C9 alkylene group or phenylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group; X and $X_1$ are each independently a halogen.

**12.** A method for preparing a positively charged acid- and alkali-resistant composite nanofiltration membrane, wherein the preparation method comprises the following steps:

S1': sequentially preparing a porous support layer and an acid- and alkali-resistant separation layer on a bottom layer to obtain a composite membrane;
S2': bringing the composite membrane into contact with an aqueous solution containing a catalyst, a halogenated quaternary ammonium salt and/or a halogenated quaternary phosphonium salt, and drying, to obtain the positively charged acid- and alkali-resistant composite nanofiltration membrane;
the halogenated quaternary ammonium salt has a structure represented by Formula 1; the halogenated quaternary phosphonium salt has a structure represented by Formula 2;

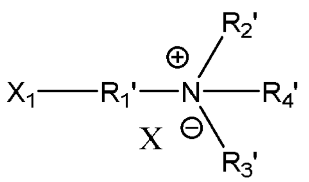 Formula 1; 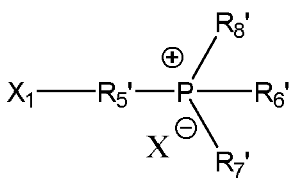 Formula 2;

wherein, $R_1$' is a substituted or unsubstituted C1-C9 alkylene group or phenylene group; $R_2$', $R_3$', $R_4$' are each independently selected from a C1-C3 alkyl group or phenyl group; $R_5$' is a C1-C6 alkylene group, phenylene group, or C7-C10 aralkylene group; $R_6$', $R_7$', $R_8$' are each independently a phenyl group or C7-C10 aralkyl group;

X and $X_1$ are each independently a halogen.

**13.** The preparation method as claimed in claim 11 or 12, wherein,

$R_1$' is a substituted or unsubstituted C1-C9 alkylene group or phenylene group, the substituent being a hydroxy, carboxyl, nitro, amino, silyl, carbonyl, ether or ester group; preferably, $R_1$' is an unsubstituted C1-C9 alkylene group or phenylene group; preferably, $R_1$' is an unsubstituted C1-C6 alkylene group or phenylene group; preferably, $R_1$' is an unsubstituted C1-C3 alkylene group; and/or
$R_2$', $R_3$', $R_4$' are each independently selected from a C1-C3 alkyl group; preferably, $R_2$', $R_3$', $R_4$' are each independently $CH_3$; and/or
$R_5$' is a C1-C3 alkylene group, phenylene group, or C8-C10 aralkylene group; preferably, $R_5$' is a C1-C3 alkylene group or C8-C10 aralkylene group;
$R_6$', $R_7$', $R_8$' are each independently a phenyl group or C8-C10 aralkyl group; preferably, $R_6$', $R_7$', $R_8$' are each independently a phenyl group; and/or
X is Cl, Br or I; and/or
$X_1$ is F, Cl, Br or I.

**14.** The preparation method as claimed in any one of claims 11-13, wherein, the halogenated quaternary ammonium salt is at least one selected from 2-chloroethyltrimethylammonium chloride, 2-chloroethyltriethylammonium chloride, 2-chloroethyltriphenylammonium chloride, 3-chloro-2-hydroxypropyltrimethylammonium chloride, 3-chloropropyltrimethylammonium chloride, 4-chlorobutyltrimethylammonium chloride, 5-chloropentyltrimethylammonium chloride, 6-chlorohexyltrimethylammonium chloride, 2-bromoethyltrimethylammonium bromide, 3-bromopropyltrimethylammonium bromide, 4-bromobutyltrimethylammonium bromide, 5-bromopentyltrimethylammonium bromide, 6-bromohexyltrimethylammonium bromide, iodomethyltrimethylammonium iodide, 2-iodoethyltrimethylammonium iodide, 3-iodopropyltrimethylammonium iodide, 4-iodobutyltrimethylammonium iodide, 5-iodopentyltrimethylammonium iodide, and 6-iodohexyltrimethylammonium iodide; preferably 2-chloroethyltrimethylammonium chloride and/or 3-bromopropyltrimethylammonium bromide; and/or

the halogenated quaternary phosphonium salt is at least one selected from 3-bromopropyltriphenylphosphonium bromide, 2-bromoethyltriphenylphosphonium bromide, 1-bromoethyltriphenylphosphonium bromide, bromomethyltriphenylphosphonium bromide, 3-chloropropyltriphenylphosphonium chloride, 2-chloroethyltriphenylphosphonium chloride, 1-chloroethyltriphenylphosphonium chloride, chloromethyltriphenylphosphonium chloride, 3-iodopropyltriphenylphosphonium iodide, 2-iodoethyltriphenylphosphonium iodide, 1-iodoethyltriphenylphosphonium iodide, iodomethyltriphenylphosphonium bromide, 4-bromomethylbenzyltriphenylphosphonium bromide, 2-bromomethylbenzyltriphenylphosphonium bromide, 3-bromomethylbenzyltriphenylphosphonium bromide, 4-chloromethylbenzyltriphenylphosphonium chloride, 2-chloromethylbenzyltriphenylphosphonium chloride, 3-chloromethylbenzyltriphenylphosphonium chloride, 4-iodomethylbenzyltriphenylphosphonium iodide, 2-iodomethylbenzyltriphenylphosphonium iodide, and 3-iodomethylbenzyltriphenylphosphonium iodide; preferably 3-bromopropyltriphenylphosphonium bromide and/or 4-bromomethylbenzyltriphenylphosphonium bromide; and/or
the catalyst is at least one selected from sodium hydroxide, potassium hydroxide, potassium carbonate, sodium carbonate, sodium bicarbonate, potassium bicarbonate, disodium hydrogen phosphate, and dipotassium hydrogen phosphate; preferably potassium hydroxide.

**15.** The preparation method as claimed in claim 12, wherein, step S1' includes:

S1-1': preparing a porous support layer on the bottom layer; and
S1-2': first bringing the surface of the porous support layer into a first contact with an aqueous phase containing the polyamine, and then a second contact with an organic phase containing the polyfunctional polar monomer, and performing heat treatment to obtaining the composite membrane.

**16.** The preparation method as claimed in any one of claims 11 and 15, wherein, the polyamine is at least one selected from polyethyleneimine, polyvinylamine, triethylenetetramine, tetraethylenepentamine, diethylenetriamine, polyethylenepolyamine, piperazine, m-phenylenediamine, and p-phenylenediamine; preferably polyethyleneimine and/or polyethylenepolyamine; and/or

the polyfunctional polar monomer is at least one selected from polyisocyanate, a triazine compound containing at least two C-Cl bonds, and polysulfonyl chloride;

preferably, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate;

preferably, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride;

preferably, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride.

**17.** The preparation method as claimed in any one of claims 11-14 and 16, wherein, in step S1,

the concentration of the halogenated quaternary ammonium salt and/or halogenated quaternary phosphonium salt in the first solution is 0.5 wt%-20 wt%, preferably 1 wt%-10 wt%; and/or

the concentration of the catalyst in the first solution is 0.01 wt%-5 wt%, preferably 0.1 wt%-1 wt%; and/or

the concentration of the polyamine in the second solution is 1 wt%-20 wt%, preferably 5 wt%-10 wt%; and/or

the amounts of the first solution and the second solution are such that the mass ratio of the polyamine, the halogenated quaternary ammonium salt and/or halogenated quaternary phosphonium salt, and the catalyst is 1-1000:1-100:1, preferably 1-200:1-50:1; and/or

the reaction conditions include: a reaction temperature of 25-90°C, preferably 40-60°C; and a reaction time of 1-48 h, preferably 6-24 h; and/or

wherein, in step S3,

the concentration of the modified polyamine in the aqueous phase is 0.1 wt%-10 wt%, preferably 0.5 wt%-2.5 wt%; and/or

the concentration of the polyfunctional polar monomer in the organic phase is 0.01 wt%-2 wt%, preferably 0.05 wt%-1 wt%; and/or

the first contact time is 5-100 s, preferably 10-60 s; and/or

the second contact time is 10-200 s, preferably 20-120 s; and/or

the heat treatment conditions include: a heat treatment temperature of 40-150°C, preferably 50-120°C; and a heat treatment time of 0.5-10 min, preferably 1-5 min.

**18.** The preparation method as claimed in any one of claims 12-16, wherein, in step S2', the contact method is immersion; and/or

the contact time is 10 s-10 min, preferably 20 s-1 min; the contact temperature is 20-80°C, preferably 30-50°C; and/or

the drying time is 0.5-10 min, preferably 3-5 min; the drying temperature is 40-80°C, preferably 50-70°C; and/or

the concentration of the catalyst in the aqueous solution is 0.01 wt%-5 wt%, preferably 0.1 wt%-1 wt%; and/or

the concentration of the halogenated quaternary ammonium salt and/or halogenated quaternary phosphonium salt in the aqueous solution is 1 wt%-20 wt%, preferably 5 wt%-10 wt%.

**19.** A method for preparing a positively charged acid- and alkali-resistant composite nanofiltration membrane, wherein the preparation method comprises the following steps:

S1'': preparing a porous support layer on a bottom layer;

S2'': sequentially bringing the membrane layer obtained in step S1'' into a first contact with an aqueous phase of a polyamine containing a tertiary amine group, and a second contact with an organic phase containing a polyfunctional polar monomer, and performing heat treatment to obtain a composite nanofiltration membrane including an acid- and alkali-resistant separation layer;

S3'': bringing the composite nanofiltration membrane into a third contact with an organic solution containing a halogenated alkane and a catalyst, and drying to obtain the positively charged acid- and alkali-resistant composite nanofiltration membrane.

**20.** The preparation method as claimed in claim 19, wherein, in step S2", the polyamine containing the tertiary amine group is at least one selected from polyethyleneimine, polyethylenepolyamine, 1-aminopiperazine, 1,4-diaminopiperazine, 1,4-piperazinediethylamine, and 1,4-bis(aminopropyl)piperazine, preferably polyethyleneimine and/or polyethylenepolyamine; and/or

in the aqueous phase of the polyamine containing the tertiary amine group, the concentration of the polyamine containing the tertiary amine group is 0.1 wt%-10 wt%, preferably 0.5 wt%-2.5 wt%; and/or
the polyfunctional polar monomer is at least one selected from polyisocyanate, a triazine compound containing at least two C-Cl bonds, and polysulfonyl chloride;
preferably, the polyisocyanate is at least one selected from m-xylylene diisocyanate, isophorone diisocyanate, 1,6-hexamethylene diisocyanate, toluene-2,6-diisocyanate, 1,4-phenylene diisocyanate, toluene-2,4-diisocyanate, 4,4'-methylene bis(phenyl isocyanate), 1,3-phenylene diisocyanate, 3,3'-dichloro-4,4'-biphenyl diisocyanate, dicyclohexylmethane-4,4'-diisocyanate, trimethylhexamethylene diisocyanate, L-lysine ethyl ester diisocyanate, 1,4-cyclohexyl diisocyanate, and 4-chloro-6-methyl-m-phenylene diisocyanate; preferably 1,4-phenylene diisocyanate and/or 1,3-phenylene diisocyanate;
preferably, the triazine compound containing at least two C-Cl bonds is at least one selected from cyanuric chloride, 2,4-dichloro-1,3,5-triazine, 2,5-dichloro-1,3,5-triazine, and 2,4-dichloro-6-phenyl-1,3,5-triazine; preferably cyanuric chloride;
preferably, the polysulfonyl chloride is at least one selected from 1,3-benzenedisulfonyl chloride, 1,2-benzenedisulfonyl chloride, 1,4-benzenedisulfonyl chloride, 2,4-disulfonyl chloride mesitylene, biphenyl-4,4'-disulfonyl chloride, 4,5-dichloro-1,3-benzenedisulfonyl chloride, 2,6-naphthalenedisulfonyl chloride, 1,3-naphthalenedisulfonyl chloride, 2,7-naphthalenedisulfonyl chloride, 1,3,5-benzenetrisulfonyl chloride, and 1,3,6-naphthalenetrisulfonyl chloride; preferably 1,3-benzenedisulfonyl chloride; and/or
in the organic phase, the concentration of the polyfunctional polar monomer is 0.01 wt%-2 wt%, preferably 0.05 wt%-1 wt%; and/or
the amounts of the aqueous phase of the polyamine containing the tertiary amine group and the organic phase containing the polyfunctional polar monomer are such that the weight ratio of the polyamine containing the tertiary amine group to the polyfunctional polar monomer is 2-200:1, preferably 5-80:1; and/or
the first contact time is 5-100 s, preferably 10-60 s; and/or the second contact time is 10-200 s, preferably 20-120 s; and/or
the heat treatment conditions include: a heat treatment temperature of 40-150°C, preferably 50-120°C; and a heat treatment time of 0.5-10 min, preferably 1-5 min.

**21.** The preparation method as claimed in claim 19 or 20, wherein, in step S3", the halogenated alkane is selected from a halogenated alkane represented by Formula 3 and/or a halogenated alkane represented by Formula 4;

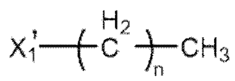 Formula 3, 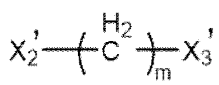 Formula 4;

$X_1$', $X_2$' and $X_3$' are each independently a halogen; n is an integer ranging from 0 to 10; m is an integer ranging from 2 to 10;
preferably, $X_1$', $X_2$' and $X_3$' are each independently Cl, Br or I;
preferably, n is an integer ranging from 0 to 7; m is an integer ranging from 2 to 8;
preferably, the halogenated alkane is at least one selected from methyl iodide, ethyl iodide, propyl iodide, butyl iodide, pentyl iodide, hexyl iodide, heptyl iodide, octyl iodide, nonyl iodide, decyl iodide, cyclopropyl iodide, cyclobutyl iodide, cyclopentyl iodide, cycloheptyl iodide, cyclooctyl iodide, 1,2-diiodoethane, 1,3-diiodopropane, 1,4-diiodobutane, 1,5-diiodopentane, 1,6-diiodohexane, 1,7-diiodoheptane, 1,8-diiodooctane, methyl chloride, ethyl chloride, propyl chloride, butyl chloride, pentyl chloride, hexyl chloride, heptyl chloride, octyl chloride, nonyl chloride, decyl chloride, cyclopropyl chloride, cyclobutyl chloride, cyclopentyl chloride, cycloheptyl chloride, cyclooctyl chloride, 1,2-dichloroethane, 1,3-dichloropropane, 1,4-dichlorobutane, 1,5-dichloropentane, 1,6-dichlorohexane, 1,7-dichloroheptane, 1,8-dichlorooctane, methyl bromide, ethyl bromide, propyl bromide, butyl bromide, pentyl bromide, hexyl bromide, heptyl bromide, octyl bromide, nonyl bromide, decyl bromide, cyclopropyl bromide, cyclobutyl bromide, cyclopentyl bromide, cycloheptyl bromide, cyclooctyl bromide, 1,2-dibromoethane, 1,3-dibromopropane, 1,4-dibromobutane, 1,5-dibromopentane, 1,6-dibromohexane, 1,7-dibromoheptane and 1,8-dibromooctane, preferably at least one selected from ethyl bromide, propyl chloride and methyl iodide; and/or

the catalyst is at least one selected from sodium hydroxide, potassium hydroxide, potassium carbonate, sodium carbonate, sodium bicarbonate, potassium bicarbonate, potassium tert-butoxide and sodium tert-butoxide, preferably selected from sodium hydroxide and/or sodium tert-butoxide; and/or
the organic solution is an alcohol solvent.

**22.** The preparation method as claimed in any one of claims 19-21, wherein, in step S3", in the organic solution, the concentration of the halogenated alkane is 1 wt%-20 wt%, preferably 5-10 wt%; and/or

in the organic solution, the concentration of the catalyst is 0.01 wt%-5 wt%, preferably 0.1 wt%-1 wt%; and/or
the weight ratio of the halogenated alkane to the catalyst is 2-50:1, preferably 5-30:1; and/or
the ratio of the volume of the organic solution to the membrane area of the composite nanofiltration membrane is 0.1-1 mL/$cm^2$, preferably 0.3-0.5 mL/$cm^2$; and/or
the conditions for the third contact include: a third contact time of 1-120 min, preferably 5-60 min; and/or
the drying conditions include: a drying temperature of 30-80°C, preferably 40-60°C; and a drying time of 0.5-5 min, preferably 1-3 min.

**23.** A positively charged acid- and alkali-resistant composite nanofiltration membrane prepared by the preparation method as claimed in any one of claims 11-22.

**24.** A use of the positively charged acid- and alkali-resistant composite nanofiltration membrane as claimed in any one of claims 1-10 and 23 in a field of water treatment.

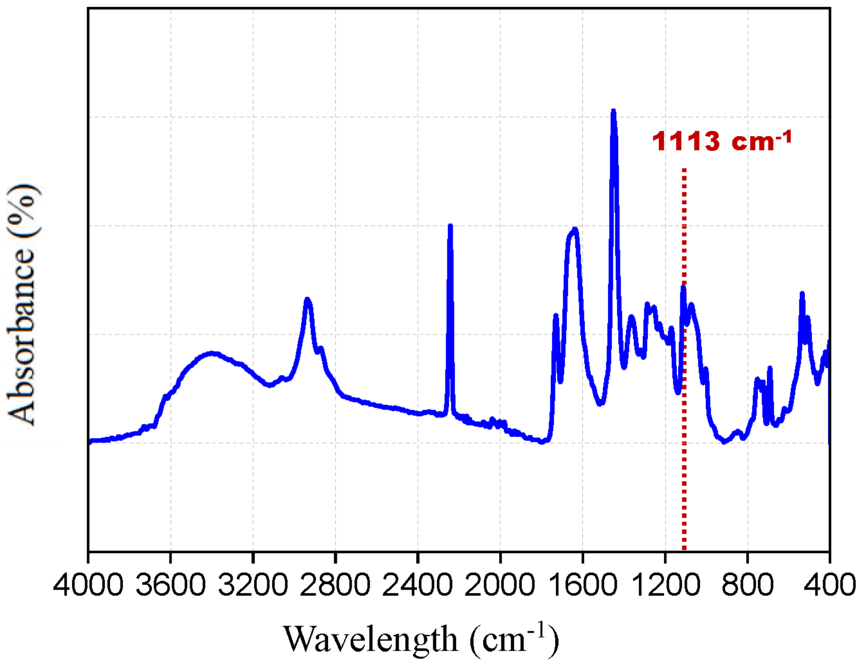
Absorbance (%)
1113 cm-1
4000 3600 3200 2800 2400 2000 1600 1200 800 400
Wavelength (cm-1)

Figure 1

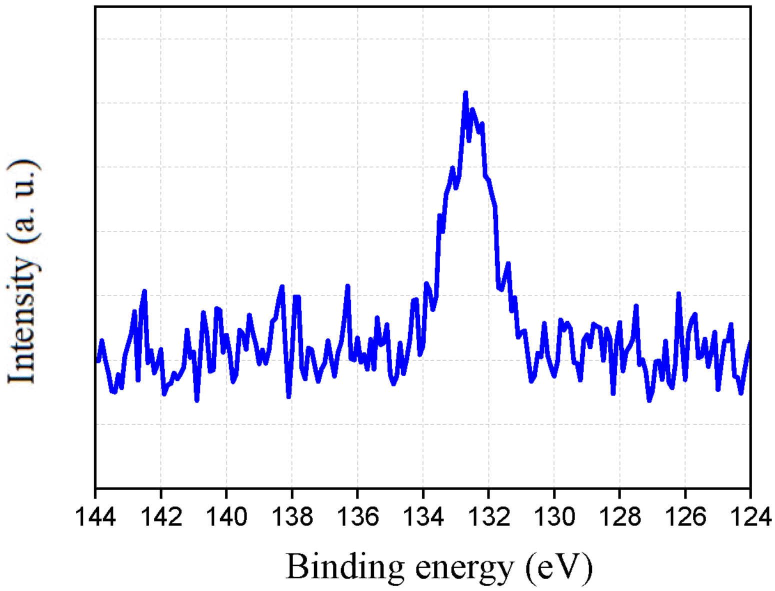
Intensity (a. u.)
144
142
140
138
136
134
132
130
128
126
124
Binding energy (eV)

Figure 2

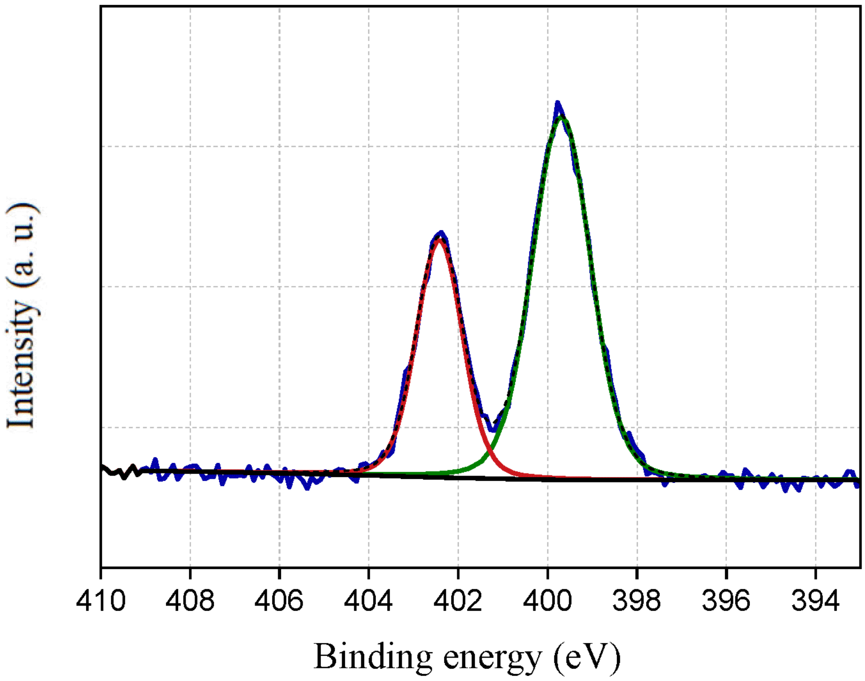
Intensity (a. u.)
410
408
406
404
402
400
398
396
394
Binding energy (eV)

Figure 3

## INTERNATIONAL SEARCH REPORT

International application No.
**PCT/CN2024/117156**

**A. CLASSIFICATION OF SUBJECT MATTER**

B01D 67/00(2006.01)i; B01D69/12(2006.01)i

According to International Patent Classification (IPC) or to both national classification and IPC

**B. FIELDS SEARCHED**

Minimum documentation searched (classification system followed by classification symbols)

B01D67/-, B01D69/-

Documentation searched other than minimum documentation to the extent that such documents are included in the fields searched

Electronic data base consulted during the international search (name of data base and, where practicable, search terms used)

CNTXT, DWPI, WPABS, ENTXT, WPABSC, ENTXTC, ISI Web of Science, 中国期刊网全文数据库, CJFD: 中国石油化工股份有限公司, 中石化化工研究院有限公司, 吴长江, 赵国珂, 张杨, 刘轶群, 潘国元, 唐功庆, 于浩, 赵慕华, 李煜, 钟天, 纳滤, 膜, 季铵盐, 季磷盐, 异氰酸酯, 三嗪, 三氮杂苯, 磺酰氯, nanofiltration, membrane+, nanofiltrat+, film+, "nf", amine, dione, hydroxybenzoate, lsocyanate, mdi, melamine, triazine, amine+

**C. DOCUMENTS CONSIDERED TO BE RELEVANT**

| Category* | Citation of document, with indication, where appropriate, of the relevant passages | Relevant to claim No. |
|---|---|---|
| X | CN 115414791 A (HUAZHONG UNIVERSITY OF SCIENCE AND TECHNOLOGY) 02 December 2022 (2022-12-02)<br>description, embodiment 1 | 1-10, 12-18, 23-24 |
| A | CN 111330447 A (TIANJIN UNIVERSITY OF SCIENCE AND TECHNOLOGY) 26 June 2020 (2020-06-26)<br>entire document | 1-24 |
| A | CN 113509839 A (CHINA PETROLEUM & CHEMICAL CORP. et al.) 19 October 2021 (2021-10-19)<br>entire document | 1-24 |
| A | CN 115845640 A (KUNMING UNIVERSITY OF SCIENCE AND TECHNOLOGY) 28 March 2023 (2023-03-28)<br>entire document | 1-24 |
| A | KR 20130049627 A (WOONGJIN CHEMICAL CO., LTD.) 14 May 2013 (2013-05-14)<br>entire document | 1-24 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 November 2024** | **19 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2024/117156

C. DOCUMENTS CONSIDERED TO BE RELEVANT

| Category* | Citation of document, with indication, where appropriate, of the relevant passages | Relevant to claim No. |
|---|---|---|
| A | US 4767645 A (ALIGENA AG) 30 August 1988 (1988-08-30)<br>entire document | 1-24 |

Form PCT/ISA/210 (second sheet) (July 2022)

**INTERNATIONAL SEARCH REPORT**
**Information on patent family members**

International application No.
**PCT/CN2024/117156**

| Patent document cited in search report | | | Publication date (day/month/year) | Patent family member(s) | | | Publication date (day/month/year) |
|---|---|---|---|---|---|---|---|
| CN | 115414791 | A | 02 December 2022 | CN | 115414791 | B | 19 April 2024 |
| CN | 111330447 | A | 26 June 2020 | CN | 111330447 | B | 15 March 2022 |
| CN | 113509839 | A | 19 October 2021 | CN | 113509839 | B | 17 March 2023 |
| CN | 115845640 | A | 28 March 2023 | CN | 115845640 | B | 16 July 2024 |
| KR | 20130049627 | A | 14 May 2013 | KR | 101335949 | B1 | 03 December 2013 |
| US | 4767645 | A | 30 August 1988 | KR | 870009742 | A | 30 November 1987 |
| | | | | GB | 2189168 | A | 21 October 1987 |
| | | | | GB | 2189168 | B | 29 November 1989 |
| | | | | IL | 82108 | A | 17 September 1990 |
| | | | | EP | 0242761 | A2 | 28 October 1987 |
| | | | | EP | 0242761 | B1 | 29 August 1990 |
| | | | | US | 4833014 | A | 23 May 1989 |
| | | | | JPS | 62269705 | A | 24 November 1987 |
| | | | | DE | 3764523 | D1 | 04 October 1990 |

Form PCT/ISA/210 (patent family annex) (July 2022)